# EUROPEAN PATENT APPLICATION

(11) **EP 4 814 558 A1**
(43) Date of publication of application: **30.09.2026**
(21) Application number: 24905761.3
(22) Date of filing: 10.10.2024
(51) Int. Cl.: G02B 13/00

(54) **OPTICAL LENS, LENS MODULE AND ELECTRONIC DEVICE**

(30) Priority: 22.12.2023 CN 202311794115; 30.04.2024 CN 202410539857
(71) Applicant: Huawei Technologies Co., Ltd., Shenzhen, Guangdong 518129 (CN)
(72) Inventor: ZHOU, Yong, Shenzhen, Guangdong 518129 (CN); YUAN, Yifan, Shenzhen, Guangdong 518129 (CN); LIN, Chia Cheng, Shenzhen, Guangdong 518129 (CN); YU, Xiaodan, Shenzhen, Guangdong 518129 (CN)
(74) Representative: Maiwald GmbH
(86) International application number: PCT/CN2024/123901
(87) International publication number: WO 2025/130272

(57) **Abstract**

This application provides an optical lens, a lens module, and an electronic device. The optical lens includes a first lens element group, a first prism, a second lens element group, and a second prism that are sequentially disposed from an object side to an image side. The first lens element group has a positive focal power, and is configured to: receive light, and converge the light. The first prism includes a first incident surface, a first reflective surface, and a first emergent surface. A first included angle between the first incident surface and the first reflective surface is less than 45°. An optical axis of the first emergent surface coincides with an optical axis of the second lens element group. The second lens element group has a negative focal power. The second prism includes a second incident surface, a second reflective surface, and a second emergent surface. A second included angle between the second reflective surface and the second emergent surface is less than 45°. The first included angle is equal to the second included angle. An optical axis of the second incident surface coincides with an optical axis of the second lens element group. In this application, the second lens element group is disposed between the first prism and the second prism, so that the optical lens has a relatively strong focusing capability, macro effect, and relatively high imaging quality.

## Description

This application claims priority to Chinese Patent Application No. 202311794115.8, filed with the China National Intellectual Property Administration on December 22, 2023 and entitled "OPTICAL LENS, LENS MODULE, AND ELECTRONIC DEVICE", which is incorporated herein by reference in its entirety.

This application claims priority to Chinese Patent Application No. 202410539857.4, filed with the China National Intellectual Property Administration on April 30, 2024 and entitled "OPTICAL LENS, LENS MODULE, AND ELECTRONIC DEVICE", which is incorporated herein by reference in its entirety.

### TECHNICAL FIELD

This application relates to the lens field, and more specifically, to an optical lens, a lens module, and an electronic device.

### BACKGROUND

With continuous development of electronic devices, an image shooting function has become an important feature of the electronic device and a main indicator for evaluating performance of the electronic device. However, in a shooting process of a current lens module, a lens of the lens module usually needs a relatively large focus stroke to implement focusing, and movement of a lens element position also causes a sharp change of a system aberration. In comparison with a distant object, obvious image quality deterioration occurs at a short distance (for example, 2 m). Therefore, a focusing capability of the lens is relatively weak, and imaging quality is relatively poor.

### SUMMARY

This application provides an optical lens, a lens module, and an electronic device, to have a relatively strong focusing capability and relatively high imaging quality.

According to a first aspect, an optical lens is provided, including a first lens element group, a first prism, a second lens element group, and a second prism that are sequentially disposed from an object side to an image side. The first lens element group includes at least one lens element. The first lens element group has a positive focal power. The first lens element group is configured to: receive light, and converge the light. The first prism includes a first incident surface, a first reflective surface, and a first emergent surface. A first included angle between the first incident surface and the first reflective surface is less than 45°. An optical axis of the first emergent surface coincides with an optical axis of the second lens element group. The second lens element group includes at least one lens element. The second lens element group has a negative focal power. The second prism includes a second incident surface, a second reflective surface, and a second emergent surface. A second included angle between the second reflective surface and the second emergent surface is less than 45°. The second included angle is equal to the first included angle. An optical axis of the second incident surface coincides with an optical axis of the second lens element group.

In this embodiment of this application, the second lens element group is disposed between the first prism and the second prism, and the first lens element group and the second lens element group are separated. In this way, the optical lens has a relatively strong focusing capability; and is capable of imaging not only a far object but also a near object (for example, a macro scene), thereby having relatively high imaging quality and high imaging definition. In addition, both the first included angle of the first prism and the second included angle of the second prism are set to be less than 45°, to implement a design of a large aperture, a large sensor format, and a small size of the optical lens.

In addition, a coaxial system is used in this embodiment of this application. In other words, the optical axis of the first emergent surface of the first prism coincides with the optical axis of the second lens element group, and the optical axis of the second incident surface of the second prism coincides with the optical axis of the second lens element group. The optical lens using the coaxial system does not generate an off-axis aberration relative to an off-axis system. Both a prism and a lens element in the coaxial system may be of a centrosymmetric structure. This facilitates production and manufacturing and has relatively strong implementability. In addition, it is easy to find central points of the prism and the lens element in the coaxial system relative to the off-axis system, to facilitate assembly of the lens elements and the prisms in the optical lens.

In a possible implementation, the first lens element group may include three lens elements (for example, a first lens element L1, a second lens element L2, and a third lens element L3), and the second lens element group may include two lens elements (for example, a fourth lens element L4 and a fifth lens element L5). In an example, L1 may have a positive focal power, and at least one of L2 and L3 has a negative focal power. It should be understood that this disposing manner facilitates aberration correction of the optical lens, thereby achieving better imaging quality. It should be understood that, from a perspective of engineering implementation, a design in which L1 has a positive focal power, L2 has a positive focal power, and L3 has a negative focal power may be used.

For example, L4 has a positive focal power, and L5 has a negative focal power; or L4 has a negative focal power, L5 has a positive focal power, and a whole of L4 and L5 has a negative focal power (that is, the second lens element group). In this example, the focal powers of the two lens elements in the second lens element group are set to one positive focal power and one negative focal power, to facilitate aberration correction, so that the optical lens has better imaging quality.

In another possible implementation, the first lens element group may include two lens elements (for example, a first lens element L1 and a second lens element L2), and the second lens element group may include three lens elements (for example, a third lens element L3, a fourth lens element L4, and a fifth lens element L5). In an example, L1 may have a positive focal power, L2 may have a negative focal power, and a whole of L1 and L2 (that is, the first lens element group) has a positive focal power. In this example, the positive focal power is set for L1, and the negative focal power is set for L2. This facilitates control of an aberration of light passing through the first lens element group. In this way, it is easier to perform aberration correction by using the first lens element group, so that the optical lens has better imaging quality. In another example, L1 may have a positive focal power, and L2 may also have a positive focal power. This is not limited in this application.

In this implementation, at least one of the three lens elements in the second lens element group has a positive focal power, and at least one of the three lens elements has a negative focal power. Specific focal powers of L3, L4, and L5 are not limited. For example, L3 may have a positive focal power, L4 may have a negative focal power, L5 may have a negative focal power (or a positive focal power), and a whole (that is, the second lens element group) of L3, L4, and L5 has a negative focal power.

Two lens elements are disposed in the first lens element group in this implementation. In comparison with a solution in which the first lens element group includes three lens elements, this implementation can well correct an aberration, and can further reduce a size of the optical lens.

It should be understood that the entire optical lens has a positive focal power, that is, has a light convergence function. In other words, a whole of the first lens element group and the second lens element group has a positive focal power. To be specific, an absolute value of a focal power of the first lens element group is greater than an absolute value of a focal power of the second lens element group.

With reference to the first aspect, in some implementations of the first aspect, the first included angle *θ*₁ and a refractive index *n₁* of the first prism satisfy *n*₁ ≥ 1/*sin*(2 * *θ*₁).

For example, a value of the first included angle is related to the refractive index of the first prism, and the value of the first included angle may range from 22° to 28°.

It should be understood that total internal reflection may occur on the first incident surface of the first prism by setting a relationship between the first included angle and the refractive index of the first prism. In other words, transmission and total internal reflection may occur on the first incident surface.

With reference to the first aspect, in some implementations of the first aspect, the second included angle *θ*₂ and a refractive index *n₂* of the second prism satisfy *n*₂ ≥ 1/*sin*(2 * *θ*₂).

For example, a value of the second included angle is related to the refractive index of the second prism, the second included angle is equal to the first included angle, and the value of the second included angle may also range from 22° to 28°.

It should be understood that total internal reflection may occur on the second emergent surface of the second prism by setting a relationship between the second included angle and the refractive index of the second prism. In other words, transmission and total internal reflection may occur on the second emergent surface.

With reference to the first aspect, in some implementations of the first aspect, the first lens element group is a moving lens element group, and in a focusing process in which the optical lens switches from a far object to a near object, the first lens element group moves toward the object side along an optical axis.

In this implementation, in a focusing process of the optical lens, the first lens element group may be moved, so that the optical lens has better macro effect and has high-quality imaging with a long focus stroke.

With reference to the first aspect, in some implementations of the first aspect, the first lens element group includes at least one variable-focus lens element, and in a focusing process in which the optical lens switches from a far object to a near object, a focal power of the variable-focus lens element in the first lens element group increases.

It should be understood that the variable-focus lens element is a lens element whose lens element surface shape may be changed in an electric driving manner, an acoustic driving manner, a magnetic driving manner, or another driving manner.

In the optical lens provided in this application, the first lens element group includes at least one variable-focus lens element. Therefore, a shorter focusing object distance can be implemented without moving the first lens element group (that is, it is ensured that a total system height remains unchanged).

With reference to the first aspect, in some implementations of the first aspect, the second lens element group includes at least one variable-focus lens element, and the variable-focus lens element in the second lens element group is configured to correct an additional aberration brought by the variable-focus lens element in the first lens element group.

For example, in a focusing process in which the optical lens switches from a far object to a near object, a focal power of the variable-focus lens element in the second lens element group decreases.

With reference to the first aspect, in some implementations of the first aspect, the first emergent surface is a plane, the second lens element group includes a first lens element, an object-side surface of the first lens element is a plane, and the first lens element is fastened to the first emergent surface of the first prism by using a cementing process.

In the optical lens provided in this application, the lens element in the second lens element group may be glued to the first emergent surface of the first prism, so that the first emergent surface of the first prism has a focal power. Relative to an integrally molded first prism with a focal power, this manner implements simpler processing and manufacturing, and production efficiency of the first prism can be improved.

With reference to the first aspect, in some implementations of the first aspect, the second incident surface is a plane, the second lens element group includes a second lens element, an image-side surface of the second lens element is a plane, and the second lens element is fastened to the second incident surface of the second prism by using a cementing process.

In the optical lens provided in this application, the lens element in the second lens element group may be glued to the second incident surface of the second prism, so that the second incident surface of the second prism has a focal power. Relative to an integrally molded second prism with a focal power, this manner implements simpler processing and manufacturing, and production efficiency of the second prism can be improved.

With reference to the first aspect, in some implementations of the first aspect, the second lens element group may include a first lens element and a second lens element. The first prism may be glued together with the first lens element in the second lens element group to form a surface having a focal power. The second prism may also be glued together with the second lens element in the second lens element group to form a surface having a focal power.

With reference to the first aspect, in some implementations of the first aspect, the optical lens further includes an aperture stop, and the aperture stop is located on the object side of the first lens element group, or the aperture stop is located between the first lens element group and the first prism, or the aperture stop is located between the first prism and the second lens element group, or the aperture stop is located between the second lens element group and the second prism.

In the optical lens provided in this application, the aperture stop may be further disposed, and a position of the aperture stop may be set according to an actual requirement, to better adjust an aperture and filter out clutter light, thereby improving imaging quality of the optical lens. In addition, a total system height of the optical lens can also be reduced by disposing the aperture stop on the object side of the first lens element group.

With reference to the first aspect, in some implementations of the first aspect, the optical lens further includes an infrared filter, and the infrared filter is located on the image side of the second prism.

For example, in some implementations, an infrared cut-off film layer may be disposed on a surface of the second emergent surface of the second prism.

In the optical lens provided in this application, the infrared filter or the infrared cut-off film layer may be further disposed, to filter out an unneeded optical signal.

With reference to the first aspect, in some implementations of the first aspect, the optical lens further includes a third lens element group, the third lens element group includes at least one lens element, and the third lens element group is located on the image side of the second prism. For example, the third lens element group may be located between the second prism and the infrared filter.

For example, the first lens element group may include the first lens element, and the first lens element has a positive focal power; the second lens element group may include the second lens element, and the second lens element has a negative focal power; and the third lens element group may include a third lens element, and the third lens element may have a positive focal power or a negative focal power.

It should be understood that the entire optical lens has a positive focal power, that is, has a light convergence function. In other words, a whole of the first lens element group, the second lens element group, and the third lens element group has a positive focal power.

According to a second aspect, an optical lens is provided, including a first lens element group, a first prism, and a second prism that are sequentially disposed from an object side to an image side. The first lens element group includes at least one lens element. The first lens element group has a positive focal power. The first lens element group is configured to: receive light, and converge the light. The first prism includes a first incident surface, a first reflective surface, and a first emergent surface. A first included angle between the first incident surface and the first reflective surface is less than 45°. The second prism includes a second incident surface, a second reflective surface, and a second emergent surface. A second included angle between the second reflective surface and the second emergent surface is less than 45°. The second included angle is equal to the first included angle. An optical axis of the second incident surface coincides with an optical axis of the first emergent surface. The first emergent surface has a focal power. The second incident surface has a focal power. The focal power of the second incident surface is opposite to the focal power of the first emergent surface. A whole of the first prism and the second prism has a negative focal power.

In the optical lens provided in this application, the emergent surface of the first prism and the incident surface of the second prism are disposed as surfaces having focal powers. In this way, the optical lens has a relatively strong focusing capability; and is capable of imaging not only a far object but also a near object (for example, a macro scene), thereby having relatively high imaging quality and high imaging definition. In addition, both the first included angle of the first prism and the second included angle of the second prism are set to be less than 45°, to implement a design of a large aperture, a large sensor format, and a small size of the optical lens.

It should be understood that the optical lens provided in this application uses a coaxial system. In other words, the optical axis of the second incident surface coincides with the optical axis of the first emergent surface. The optical lens using the coaxial system does not generate an off-axis aberration relative to an off-axis system. Both a prism and a lens element in the coaxial system may be of a centrosymmetric structure. This facilitates production and manufacturing and has relatively strong implementability. In addition, it is easy to find central points of the prism and the lens element in the coaxial system relative to the off-axis system, to facilitate assembly of the lens elements and the prisms in the optical lens.

For example, the first lens element group may include four lens elements, for example, a first lens element L1, a second lens element L2, a third lens element L3, and a fourth lens element L4. L1 has a positive focal power, and at least one of L2, L3, and L4 has a negative focal power. It should be understood that this disposing manner facilitates aberration correction of the optical lens, thereby achieving better imaging quality.

With reference to the second aspect, in some implementations of the second aspect, the first included angle *θ*₁ and a refractive index *n₁* of the first prism satisfy *n*₁ ≥ 1/*sin*(2 * *θ*₁).

For example, a value of the first included angle is related to the refractive index of the first prism, and the value of the first included angle may range from 22° to 28°.

It should be understood that total internal reflection may occur on the first incident surface of the first prism by setting a relationship between the first included angle and the refractive index of the first prism. In other words, transmission and total internal reflection may occur on the first incident surface.

With reference to the second aspect, in some implementations of the second aspect, the second included angle *θ*₂ and a refractive index *n₂* of the second prism satisfy *n*₂ ≥ 1/*sin*(2 * *θ*₂).

For example, a value of the second included angle is related to the refractive index of the second prism, the second included angle is equal to the first included angle, and the value of the second included angle may also range from 22° to 28°.

It should be understood that total internal reflection may occur on the second emergent surface of the second prism by setting a relationship between the second included angle and the refractive index of the second prism. In other words, transmission and total internal reflection may occur on the second emergent surface.

With reference to the second aspect, in some implementations of the second aspect, the first lens element group is a moving lens element group, and in a focusing process in which the optical lens switches from a far object to a near object, the first lens element group moves toward the object side along an optical axis.

In this implementation, in a focusing process of the optical lens, the first lens element group may be moved, so that the optical lens has better macro effect and has high-quality imaging with a long focus stroke.

With reference to the second aspect, in some implementations of the second aspect, the first lens element group includes at least one variable-focus lens element, and in a focusing process in which the optical lens switches from a far object to a near object, a focal power of the variable-focus lens element in the first lens element group increases.

It should be understood that the variable-focus lens element is a lens element whose lens element surface shape may be changed in an electric driving manner, an acoustic driving manner, a magnetic driving manner, or another driving manner.

In the optical lens provided in this application, the first lens element group includes at least one variable-focus lens element. Therefore, a shorter focusing object distance can be implemented without moving the first lens element group (that is, it is ensured that a total system height remains unchanged).

With reference to the second aspect, in some implementations of the second aspect, the optical lens further includes a first lens element, and the first lens element is fastened to the first emergent surface by using a cementing process, to form a surface having a focal power.

In the optical lens provided in this application, the first lens element may be glued to the first prism, so that the first emergent surface of the first prism has a focal power. Relative to an integrally molded first prism with a focal power, this manner implements simpler processing and manufacturing, and production efficiency of the first prism can be improved.

With reference to the second aspect, in some implementations of the second aspect, the optical lens further includes a second lens element, and the second lens element is fastened to the second incident surface by using a cementing process, to form a surface having a focal power.

In the optical lens provided in this application, the second lens element may be glued to the second prism, so that the second incident surface of the second prism has a focal power. Relative to an integrally molded second prism with a focal power, this manner implements simpler processing and manufacturing, and production efficiency of the second prism can be improved.

With reference to the second aspect, in some implementations of the second aspect, the first prism and/or the second prism are/is an integrally formed prism with a focal power. To be specific, the first prism and/or the second prism may be formed by using a processing and manufacturing method of integrally molding, and at least one surface of the formed prism is a surface with a focal power.

With reference to the second aspect, in some implementations of the second aspect, the optical lens further includes an aperture stop, and the aperture stop is located on the object side of the first lens element group, or the aperture stop is located between the first lens element group and the first prism, or the aperture stop is located between the first prism and the second prism.

In the optical lens provided in this application, the aperture stop may be further disposed, and a position of the aperture stop may be set according to an actual requirement, to better adjust an aperture and filter out clutter light, thereby improving imaging quality of the optical lens. In addition, a total system height of the optical lens can also be reduced by disposing the aperture stop on the object side of the first lens element group.

With reference to the second aspect, in some implementations of the second aspect, the optical lens further includes an infrared filter, and the infrared filter is located on the image side of the second prism.

For example, in some implementations, an infrared cut-off film layer may be disposed on a surface of the second emergent surface of the second prism.

In the optical lens provided in this application, the infrared filter or the infrared cut-off film layer may be further disposed, to filter out an unneeded optical signal.

With reference to the second aspect, in some implementations of the second aspect, the optical lens further includes a third lens element group, the third lens element group includes at least one lens element, and the third lens element group is located on the image side of the second prism. For example, the third lens element group may be located between the second prism and the infrared filter.

For example, the third lens element group may include a third lens element, the third lens element may have a positive focal power or a negative focal power, and the third lens element group may be configured to further correct an aberration.

According to a third aspect, an optical lens is provided, including a first lens element group, a first prism, a second lens element group, and a third prism that are sequentially disposed from an object side to an image side. The first lens element group includes at least one lens element. The first lens element group has a positive focal power. The first lens element group is configured to: receive light, and converge the light. The first prism includes a first incident surface, a first reflective surface, and a first emergent surface. A first included angle between the first incident surface and the first reflective surface is less than 45°. An optical axis of the first emergent surface coincides with an optical axis of the second lens element group. The second lens element group includes at least one lens element. The second lens element group has a negative focal power. The third prism includes a third incident surface, a third reflective surface, and a third emergent surface. An included angle between the third incident surface and the third reflective surface is equal to an included angle between the third emergent surface and the third reflective surface. A third included angle formed between the third incident surface and the third reflective surface is twice the first included angle. The third included angle is less than 90° and greater than 40°. An optical axis of the third incident surface coincides with an optical axis of the second lens element group.

The first prism may be configured to fold an optical axis of an optical system twice, and the third prism may be configured to fold the optical axis of the optical system three times.

In this embodiment of this application, the second lens element group is disposed between the first prism and the third prism, and the first lens element group and the second lens element group are separated. In this way, the optical lens has a relatively strong focusing capability; and is capable of imaging not only a far object but also a near object (for example, a macro scene), thereby having relatively high imaging quality and high imaging definition. In addition, the included angle between the third incident surface and the third reflective surface is set to be equal to the included angle between the third emergent surface and the third reflective surface, and the third included angle formed between the third incident surface and the third reflective surface is twice the first included angle, so that light can be reflected in the third prism three times. An optical path is folded more times in the third prism, and space utilization is higher. This facilitates a design of a long-focus lens. In addition, when light that is incident to the third prism is reflected for a second time, the light is bent upward. In this way, an optical axis of emergent light of the third prism may move upward, thereby further reducing a length of the optical system.

It should be understood that a coaxial system is used in this embodiment of this application. In other words, the optical axis of the first emergent surface of the first prism coincides with the optical axis of the second lens element group, and the optical axis of the third incident surface of the third prism coincides with the optical axis of the second lens element group. The optical lens using the coaxial system does not generate an off-axis aberration relative to an off-axis system. Both a prism and a lens element in the coaxial system may be of a centrosymmetric structure. This facilitates production and manufacturing and has relatively strong implementability. In addition, it is easy to find central points of the prism and the lens element in the coaxial system relative to the off-axis system, to facilitate assembly of the lens elements and the prisms in the optical lens.

In a possible implementation, the first lens element group may include three lens elements (for example, a first lens element L1, a second lens element L2, and a third lens element L3), and the second lens element group may include two lens elements (for example, a fourth lens element L4 and a fifth lens element L5). In an example, L1 may have a positive focal power, and at least one of L2 and L3 has a negative focal power. It should be understood that this disposing manner facilitates aberration correction of the optical lens, thereby achieving better imaging quality. It should be understood that, from a perspective of engineering implementation, a design in which L1 has a positive focal power, L2 has a positive focal power, and L3 has a negative focal power may be used.

For example, L4 has a positive focal power, and L5 has a negative focal power; or L4 has a negative focal power, L5 has a positive focal power, and a whole of L4 and L5 has a negative focal power (that is, the second lens element group). In this example, the focal powers of the two lens elements in the second lens element group are set to one positive focal power and one negative focal power, to facilitate aberration correction, so that the optical lens has better imaging quality.

In a possible implementation, the first lens element group may include two lens elements (for example, a first lens element L1 and a second lens element L2), and the second lens element group may include three lens elements (for example, a third lens element L3, a fourth lens element L4, and a fifth lens element L5). In an example, L1 may have a positive focal power, L2 may have a negative focal power, and a whole of L1 and L2 (that is, the first lens element group) has a positive focal power. In this example, the positive focal power is set for L1, and the negative focal power is set for L2. This facilitates control of an aberration of light passing through the first lens element group. In this way, it is easier to perform aberration correction by using the first lens element group, so that the optical lens has better imaging quality. In another example, L1 may have a positive focal power, and L2 may also have a positive focal power. This is not limited in this application.

In this implementation, at least one of the three lens elements in the second lens element group has a positive focal power, and at least one of the three lens elements has a negative focal power. Specific focal powers of L3, L4, and L5 are not limited. For example, L3 may have a positive focal power, L4 may have a negative focal power, L5 may have a negative focal power (or a positive focal power), and a whole (that is, the second lens element group) of L3, L4, and L5 has a negative focal power.

Two lens elements are disposed in the first lens element group in this implementation. In comparison with a solution in which the first lens element group includes three lens elements, this implementation can well correct an aberration, and can further reduce a size of the optical lens.

It should be understood that the entire optical lens has a positive focal power, that is, has a light convergence function. In other words, a whole of the first lens element group and the second lens element group has a positive focal power. To be specific, an absolute value of a focal power of the first lens element group is greater than an absolute value of a focal power of the second lens element group.

With reference to the third aspect, in some implementations of the third aspect, the first included angle *θ*₁ and a refractive index *n₁* of the first prism satisfy *n*₁ ≥ 1/*sin*(2 * *θ*₁).

For example, a value of the first included angle is related to the refractive index of the first prism, and the value of the first included angle may range from 22° to 28°.

It should be understood that total internal reflection may occur on the first incident surface of the first prism by setting a relationship between the first included angle and the refractive index of the first prism. In other words, transmission and total internal reflection may occur on the first incident surface.

With reference to the third aspect, in some implementations of the third aspect, the first lens element group is a moving lens element group, and in a focusing process in which the optical lens switches from a far object to a near object, the first lens element group moves toward the object side along an optical axis.

In this implementation, in a focusing process of the optical lens, the first lens element group may be moved, so that the optical lens has better macro effect and has high-quality imaging with a long focus stroke.

With reference to the third aspect, in some implementations of the third aspect, the first lens element group includes at least one variable-focus lens element, and in a focusing process in which the optical lens switches from a far object to a near object, a focal power of the variable-focus lens element in the first lens element group increases.

It should be understood that the variable-focus lens element is a lens element whose lens element surface shape may be changed in an electric driving manner, an acoustic driving manner, a magnetic driving manner, or another driving manner.

In the optical lens provided in this application, the first lens element group includes at least one variable-focus lens element. Therefore, a shorter focusing object distance can be implemented without moving the first lens element group (that is, it is ensured that a total system height remains unchanged).

With reference to the third aspect, in some implementations of the third aspect, the second lens element group includes at least one variable-focus lens element, and the variable-focus lens element in the second lens element group is configured to correct an additional aberration brought by the variable-focus lens element in the first lens element group.

For example, in a focusing process in which the optical lens switches from a far object to a near object, a focal power of the variable-focus lens element in the second lens element group decreases.

With reference to the third aspect, in some implementations of the third aspect, the first emergent surface is a plane, the second lens element group includes a first lens element, an object-side surface of the first lens element is a plane, and the first lens element is fastened to the first emergent surface of the first prism by using a cementing process.

In the optical lens provided in this application, the lens element in the second lens element group may be glued to the first emergent surface of the first prism, so that the first emergent surface of the first prism has a focal power. Relative to an integrally molded first prism with a focal power, this manner implements simpler processing and manufacturing, and production efficiency of the first prism can be improved.

With reference to the third aspect, in some implementations of the third aspect, the optical lens further includes an aperture stop, and the aperture stop is located on the object side of the first lens element group, or the aperture stop is located between the first lens element group and the first prism, or the aperture stop is located between the first prism and the second lens element group, or the aperture stop is located between the second lens element group and the third prism.

In the optical lens provided in this application, the aperture stop may be further disposed, and a position of the aperture stop may be set according to an actual requirement, to better adjust an aperture and filter out clutter light, thereby improving imaging quality of the optical lens. In addition, a total system height of the optical lens can also be reduced by disposing the aperture stop on the object side of the first lens element group.

With reference to the third aspect, in some implementations of the third aspect, the optical lens further includes an infrared filter, and the infrared filter is located on the image side of the third prism.

For example, in some implementations, an infrared cut-off film layer may be disposed on a surface of the third emergent surface of the third prism.

In the optical lens provided in this application, the infrared filter or the infrared cut-off film layer may be further disposed, to filter out an unneeded optical signal.

With reference to the third aspect, in some implementations of the third aspect, the optical lens further includes a third lens element group, the third lens element group includes at least one lens element, and the third lens element group is located on the image side of the third prism.

For example, the third lens element group may be located between the third prism and the infrared filter.

For example, the first lens element group may include the first lens element, and the first lens element has a positive focal power; the second lens element group may include the second lens element, and the second lens element has a negative focal power; and the third lens element group may include a third lens element, and the third lens element may have a positive focal power or a negative focal power.

It should be understood that the entire optical lens has a positive focal power, that is, has a light convergence function. In other words, a whole of the first lens element group, the second lens element group, and the third lens element group has a positive focal power.

According to a fourth aspect, a lens module is provided, including an image sensor and the optical lens according to the first aspect and any one of aspects of the first aspect, or including an image sensor and the optical lens according to the second aspect and any one of aspects of the second aspect. The optical lens is configured to image a scene on an object side on the image sensor.

In a possible implementation, the image sensor is located on an image side of the optical lens and is disposed parallel to the second emergent surface. In this implementation, the image sensor is vertically disposed. In other words, the image sensor is disposed perpendicular to a thickness direction of an electronic device.

In a possible implementation, the image sensor is located on an image side of the optical lens and is disposed parallel to the second reflective surface. In this implementation, the image sensor is disposed in a tilt manner, so that a total system height of the electronic device can be reduced to some extent.

According to a fifth aspect, a lens module is provided, including an image sensor and the optical lens according to the third aspect and any one of aspects of the third aspect. The optical lens is configured to image a scene on an object side on the image sensor.

In a possible implementation, the image sensor is located on an image side of the optical lens and is disposed parallel to the third emergent surface. In this implementation, the image sensor is vertically disposed. In other words, the image sensor is disposed perpendicular to a thickness direction of an electronic device.

According to a sixth aspect, an electronic device is provided, including an image processor and the lens module according to the fourth aspect and any one of aspects of the fourth aspect, or including an image processor and the lens module according to the fifth aspect and any one of aspects of the fifth aspect. The image processor is communicatively connected to the lens module. The image processor is configured to: obtain image data from the lens module, and process the image data.

For beneficial effects of the fourth aspect to the sixth aspect, refer to the beneficial effects of the first aspect to the third aspect. Details are not described herein again.

### BRIEF DESCRIPTION OF DRAWINGS

FIG. 1 is a diagram of an electronic device according to an embodiment of this application;
FIG. 2A and FIG. 2B are diagrams of a structure of a lens module according to an embodiment of this application;
FIG. 3 and FIG. 4 are diagrams of modulation transfer functions of the lens module shown in FIG. 2A and FIG. 2B at an infinite object distance and at an object distance of 200 mm;
FIG. 5A and FIG. 5B are diagrams of a structure of another lens module according to an embodiment of this application;
FIG. 6 and FIG. 7 are diagrams of modulation transfer functions of the lens module shown in FIG. 5A and FIG. 5B at an infinite object distance and at an object distance of 60 mm;
FIG. 8A and FIG. 8B are diagrams of a structure of another lens module according to an embodiment of this application;
FIG. 9 and FIG. 10 are diagrams of modulation transfer functions of the lens module shown in FIG. 8A and FIG. 8B at an infinite object distance and at an object distance of 200 mm;
FIG. 11A and FIG. 11B are diagrams of a structure of another lens module according to an embodiment of this application;
FIG. 12 and FIG. 13 are diagrams of modulation transfer functions of the lens module shown in FIG. 11A and FIG. 11B at an infinite object distance and at an object distance of 200 mm;
FIG. 14A and FIG. 14B are diagrams of a structure of another lens module according to an embodiment of this application;
FIG. 15 and FIG. 16 are diagrams of modulation transfer functions of the lens module shown in FIG. 14A and FIG. 14B at an infinite object distance and at an object distance of 200 mm;
FIG. 17A and FIG. 17B are diagrams of a structure of another lens module according to an embodiment of this application; and
FIG. 18A and FIG. 18B are diagrams of a structure of another lens module according to an embodiment of this application.

### DESCRIPTION OF EMBODIMENTS

The following describes technical solutions of embodiments in this application with reference to accompanying drawings.

Terms used in the following embodiments are merely intended to describe specific embodiments, but are not intended to limit this application. In embodiments of this application, "first", "second", and various numbers are used for differentiation for ease of description, and are not used to limit the scope of embodiments of this application. The character "/" generally indicates an "or" relationship between associated objects. Sequence numbers of the following processes do not mean an execution sequence. The execution sequence of the processes should be determined based on functions and internal logic of the processes, and should not constitute any limitation on an implementation process of embodiments of this application. For example, in embodiments of this application, the terms "10", "20", "30", and the like are merely identifiers for ease of description, and are not intended to limit an execution sequence of steps.

Reference to "an embodiment", "some embodiments", or the like described in embodiments means that one or more embodiments of this application include a specific feature, structure, or characteristic described with reference to embodiments. In this application, the term "in an example", "for example", or the like is used to give an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner. The terms "include", "have", and their variants all mean "include but are not limited to", unless otherwise specifically emphasized in another manner. In embodiments of this application, descriptions such as "when", "in a case", and "if" all mean that a device performs corresponding processing in a specific objective situation, but are not intended to limit time, do not require that the device has a determining action during implementation, and do not mean any other limitation.

For ease of understanding, the following first explains and describes technical terms in this application.

Lens: The lens is a component that uses a lens element refraction principle to enable light of a scene to pass through the lens to form a clear image on a focusing plane.

Lens element group: The lens element group is a combination of one or more lens elements. The lens element group may entirely move, or at least one lens element in the lens element group may move. In this application, the lens element group may also be understood as a lens element group or a lens element group.

Optical axis: The optical axis is an axis that vertically runs through a center of a lens element. An optical axis of a lens is an axis that passes through centers of all lens elements of the lens. When light beams parallel to the optical axis enter a convex lens element, in an ideal convex lens element, all the light beams should converge at a point behind the lens element. The point at which all the light beams converge is a focal point.

Object side and image side: With a lens element as a boundary, a side on which a shot object is located is an object side, and a surface that is on the lens element and that is close to the object side may be referred to as an object-side surface. With the lens element as a boundary, a side on which an image of the shot object is located is an image side, and the surface that is on the lens element and that is close to the image side may be referred to as an image-side surface.

Focal length (focal length): The focal length is also referred to as focal distance, is a measure of how strongly an optical system converges or diverges light, and is a distance from an optical center of a lens element or a lens element group to a focal point when an infinitely distant scene forms a clear image through the lens element or the lens element group on a focal plane, or may be understood as a vertical distance from an optical center of the lens element or the lens element group to the focal plane. From a practical perspective, the focal length may be understood as a distance from a center of a lens to an imaging plane. For a prime lens, a position of an optical center of the prime lens is fixed. For a lens module, a change in an optical center of a lens causes a change in a focal length of the lens.

Focal power (focal power): The focal power is equal to a difference between convergence of image light and convergence of object light, and indicates a capability of an optical system in refracting light. For a lens element or a lens element group with a positive focal power, the lens element or lens element group has a positive focal length, and has effect of converging light. For a lens element or a lens element group with a negative focal power, the lens element or lens element group has a negative focal length, and has effect of diverging light.

Diaphragm (diaphragm): The diaphragm is an edge, a specially arranged barrier with a hole, or a frame that is of an optical element in an optical assembly and that is used to limit a size of an imaging light beam or an imaging space unit.

Aperture stop (aperture stop, STO): The aperture stop is a stop that limits a maximum tilt angle of a marginal light beam in an on-axis point imaging light beam, namely, a stop with a minimum incident aperture angle.

Aperture (aperture): The aperture is an apparatus configured to control an amount of light passing through a lens and entering a photosensitive surface inside a device body, and is usually located in the lens. An aperture size is expressed by an F-number.

Aperture F-number (F#): The aperture F value is equal to a focal length of a lens divided by an entrance pupil diameter. When the focal length of the lens remains unchanged, a larger entrance pupil diameter indicates a larger aperture, a smaller aperture F-number, a larger amount of incoming light, a brighter image, and a more blurred background of a subject. On the contrary, a smaller entrance pupil diameter indicates a smaller aperture, a larger aperture F-number, a smaller amount of incoming light, a darker image, and a clearer foreground and background of the subject.

Total track length (total track length, TTL): The total track length is a total length from a head of a lens tube to an imaging plane, and is a main factor that forms a camera height.

IMH (Image Height): The IMH indicates a half of a diagonal length of an effective pixel area on a photosensitive chip, in other words, an image height of an imaging plane.

Field of view (field of view, FOV): In an optical instrument, when a lens of the optical instrument is used as a vertex, an included angle formed by two edges of a maximum range within which a target object can be observed through the lens is referred to as the field of view. A size of the field of view determines a range of vision of the optical instrument. A larger field of view indicates broader vision and a smaller optical power. A shorter focal length indicates a wider horizontal field of view and a smaller image. The horizontal field of view becomes narrower as the focal length increases. An object to be shot increases accordingly.

Abbe number: The Abbe number is a dispersion coefficient; and is a ratio of variations of refractive indices of an optical material at different wavelengths, and represents a degree of dispersion of the material.

Aberration: A paraxial area of an optical system has properties of an ideal optical system. Paraxial light emitted by a point on an object intersects with an imaging plane at a point. It is difficult for light beams actually passing through different apertures of a lens can hardly perfectly intersect at one point. Instead, there are deviations from the position of a paraxial image point. These deviations are collectively referred to as aberrations.

Meridian plane (meridian plane): The meridian plane is a plane formed by main light (main light) of an object point outside an optical axis and the optical axis.

Sagittal plane (sagittal plane): The sagittal plane is a plane that passes through the main light (main light) of the object point outside the optical axis and that is perpendicular to the meridian plane.

A large-sensor, large-aperture, and high-resolution long-focus lens of a mobile phone is a main trend in the future. A big pixel size can bring a higher full well capacity (that is, a maximum quantity of electrons that can be collected and accommodated by pixels), thereby implementing a larger dynamic range. In addition, a lower Nyquist frequency can bring better focusing and image stabilization effect. A large aperture can bring a larger amount of incoming light and a higher diffraction limit.

An existing long-focus lens has relatively poor imaging quality in an extremely low illumination environment, and focusing performance is limited by a signal-to-noise ratio. To improve an amount of light entering the lens and imaging definition of the lens, lens elements with a larger aperture and longer and more complex optical paths are required to correct an aberration. In a case of ensuring that an equivalent focal length remains unchanged, a large sensor corresponds to a longer effective focal length, resulting in a longer TTL and further increasing a size of a lens. For a smartphone, a size is a major constraint, and therefore a large sensor is used. Therefore, in recent years, a plurality of methods (for example, a 45° prism solution) for folding an optical path by using a prism have emerged. In the existing 45° prism solution, a size of the prism is limited by a sensor format, and the sensor format limits a tail height of an entire module. Therefore, a protruding height of the entire module is very high in a case of a large sensor. In addition, efficiency of folding an optical path in this solution is relatively low. For a long-focus module with a large sensor, a 45° prism folding solution still cannot meet size requirements of smartphones. Therefore, some irregular prism solutions emerge to break a 45° prism symmetry rule and achieve higher folding efficiency. However, it is difficult to achieve very good macro focusing quality in this solution.

Therefore, this application provides a large-aperture irregular prism refraction long-focus lens based on an image shooting requirement of a mobile phone for a large aperture, a large sensor format, a small size, and high imaging quality, which may be applied to other small intelligent terminals such as future mobile phones. High-quality imaging with a large aperture, a large sensor format, a small size, and a long focus stroke is achieved by properly adjusting a quantity of optical elements, a focal power, a material, and a position of each optical element in a lens element group.

It should be noted that an electronic device in embodiments of this application may include a handheld device, a vehicle-mounted device, a wearable device, a computing device, or another processing device connected to a wireless modem. The electronic device is, for example, a cellular phone (cellular phone), a mobile phone, a smartphone (smart phone), a tablet computer, a portable computer, a laptop computer (laptop computer), a video camera, a video recorder, a camera, a smart watch (smart watch), a smart band (smart wristband), or a device having a photographing or shooting function in another form. A specific type of the electronic device is not specially limited in embodiments of this application.

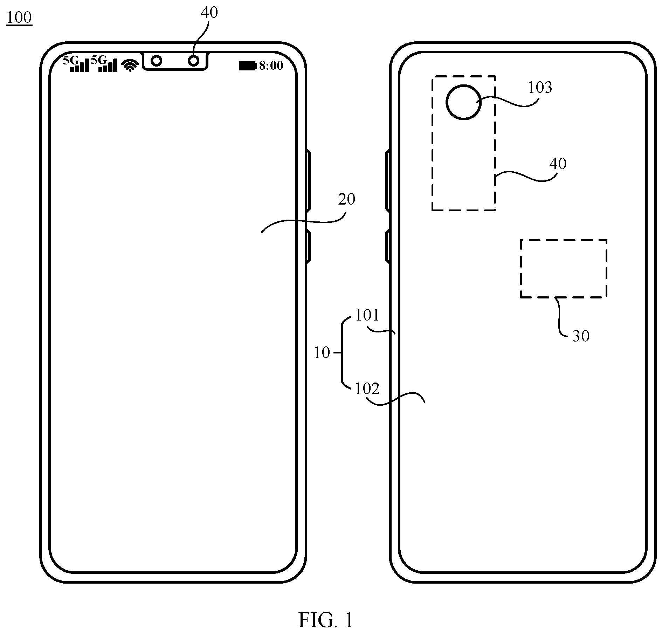

FIG. 1 is a diagram of an electronic device according to an embodiment of this application. Embodiments of this application are described by using an example in which the electronic device 100 is a mobile phone.

The electronic device 100 includes a housing 10, a display 20, an image processor 30, and a lens module 40. In some embodiments, the housing 10 includes a frame 101 and a rear cover 102. The frame 101 and the rear cover 102 may be an integrally molded structure, or may be assembled to form an integrated structure. The display 20 and the rear cover 102 are respectively mounted on two sides of the frame 101, and jointly surround an inner cavity of the entire device. The display 20 may be a liquid crystal display (liquid crystal display, LCD), an organic light-emitting diode (organic light-emitting diode, OLED) display, or the like. The OLED display may be a flexible display or a rigid display.

The image processor 30 and the lens module 40 are accommodated in the inner cavity of the entire device. The image processor 30 and the lens module 40 are in communication connection. The image processor 30 is configured to: obtain image data from the lens module 40, and process the image data. The communication connection between the lens module 40 and the image processor 30 may include an electrical connection such as a cable connection for performing data transmission, or may include a coupling or the like for implementing data transmission. It can be understood that the communication connection between the lens module 40 and the image processor 30 may alternatively be implemented in another manner that can implement data transmission.

The image processor 30 optimizes a digital image signal, and transmits the processed signal to the display. The image processor 30 may be an image processing chip or a digital signal processing chip. The image processor 30 is configured to quickly transfer in time data obtained by a photosensitive chip to a central processing unit and refresh the photosensitive chip. Therefore, chip quality of the image processor 30 directly affects picture quality (for example, color saturation and definition).

The lens module 40 may be disposed only on a front face of the electronic device 100, is configured to shoot a scene on a side of the front face of the electronic device 100, and may be referred to as a front-facing lens module in some embodiments; or may be disposed only on a back face of the electronic device 100, is configured to shoot a scene on a side of the back face of the electronic device 100, and may be referred to as a rear-facing lens module in some embodiments; or may be disposed on a front face and a back face of the electronic device 100. As shown in FIG. 1, a lens module 40 is disposed on the front face of the electronic device 100, and a lens module 40 is also disposed on the back face of the electronic device 100. A scene on the side of the front face of the electronic device 100 may be shot, or a scene on the side of the back face of the electronic device 100 may be shot, provided that corresponding lens modules are used during shooting.

It should be understood that an installation position of the lens module 40 is merely an example. In some embodiments, when the lens module 40 serves as the front-facing lens module, the lens module 40 may be installed at another position on the electronic device 100, for example, installed at a left side of an earpiece, an upper middle position on the electronic device 100, a lower part of the electronic device 100, or four corners of the electronic device 100. When the lens module 40 serves as the rear-facing lens module, the lens module 40 may be installed at an upper middle position or an upper right corner of the back face of the electronic device 100. In some other embodiments, the lens module 40 may alternatively not be disposed on a main body of the electronic device 100, but may be disposed on an edge protruding from the main body of the electronic device 100; or may be disposed on a component that can move or rotate relative to the electronic device 100. For example, the component may extend, retract, or rotate from the main body of the electronic device 100. When the lens module 40 can rotate relative to the electronic device 100, the lens module 40 is equivalent to the front-facing lens module and the rear-facing lens module. In other words, by rotating the same lens module 40, the scene on the side of the front face of the electronic device 100 may be shot, and the scene on the side of the back face of the electronic device 100 may also be shot. In some other embodiments, when the display 20 can be folded, the lens module 40 may serve as the front-facing lens module, and may also serve as the rear-facing lens module. As the display 20 is folded, the lens module 40 is configured to shoot the scene on the side of the front face of the electronic device 100, or shoot the scene on the side of the back face of the electronic device 100.

A quantity of disposed lens modules 40 is not limited in this embodiment of this application. There may be one, two, four, or more lens modules 40. For example, one or more lens modules 40 may be disposed on the front face of the electronic device 100, and one or more lens modules 40 may be disposed on the back face of the electronic device 100. The quantity of disposed lens modules is not limited in this embodiment of this application. Relative positions of the plurality of disposed lens modules are not limited either. When the plurality of lens modules 40 are disposed, the plurality of lens modules 40 may be all the same, or may be different. For example, quantities of lens elements included in the plurality of lens modules 40 are different, or optical parameters of the lens elements are different, or positions of disposing the lens elements are different.

The lens module 40 may be configured to shoot a video and/or a photo, and may be configured to shoot scenes at different distances. For example, the lens module 40 may be configured to image a far object, may be configured to image a near object, and may be configured to take a macro scene. This is not particularly limited in this embodiment of this application.

Optionally, the electronic device 100 may further include a lens protection plate 103 configured to protect the lens module 40. The lens protection plate 103 is disposed on a housing 10, and is configured to cover the lens module 40. When the lens protection plate 103 is configured to protect the front-facing lens module, the lens protection plate 103 may cover only the front-facing lens module or cover the entire front face of the electronic device 100. When the lens protection plate 103 covers the entire front face of the electronic device 100, the lens protection plate 103 may be configured to protect both the front-facing lens module and the display 20. The lens protection plate 103 is cover glass (cover glass, CG). When the lens protection plate 103 is configured to protect the rear-facing lens module, the lens protection plate 103 may cover the entire back face of the electronic device 100, or may be disposed only at a position corresponding to the rear-facing lens module, to protect the rear-facing lens module. A material of the lens protection plate 103 may be glass, sapphire, ceramic, or the like. This is not specially limited in embodiments of this application. In some embodiments, the lens protection plate 103 is transparent, so that light outside the electronic device 100 can enter the lens module 40 through the lens protection plate 103.

It should be noted that the front face of the electronic device 100 in this embodiment of this application may be understood as a face that is on a side of the electronic device 100 and that faces the user when the user uses the electronic device 100, and the back face of the electronic device 100 may be understood as a face that is on a side of the electronic device 100 and that is opposite to the user when the user uses the electronic device 100.

It should be understood that the electronic device 100 shown in FIG. 1 is not limited to the foregoing components, and may further include other components, for example, a battery, a flash, a fingerprint recognition module, an earpiece, a button, and a sensor. In this embodiment of this application, an electronic device in which the lens module 40 is installed is used as an example for description. However, the components installed in the electronic device 100 are not limited thereto.

In some embodiments, the electronic device 100 may further include an analog-to-digital converter (also referred to as an A/D converter, which is not shown in the figure). The analog-to-digital converter is connected between the lens module 40 and the image processor 30. The analog-to-digital converter is configured to convert a signal generated by the lens module 40 into a digital image signal, and transmit the digital image signal to the image processor 30. Then the image processor 30 processes the digital image signal, and finally the display 20 displays an image or a video.

In some embodiments, the electronic device 100 may further include a memory (not shown in the figure). The memory is communicatively connected to the image processor 30. After processing the digital image signal, the image processor 30 transmits the image to the memory, so that when an image needs to be viewed subsequently, the image can be found from the memory at any time and displayed on the display 20. In some embodiments, the image processor 30 further compresses a processed digital image signal, and then stores a compressed digital image signal in the memory to save memory space.

In some embodiments, the lens module 40 may include an optical lens and a photosensitive element. The photosensitive element is located on an image side of the optical lens. The lens module 40 may further include a circuit board (not shown in the figure). The photosensitive element may be fastened to the circuit board. The light filter may be located between the optical lens and the photosensitive element. Light can pass through the optical lens to illuminate a photosensitive surface of the photosensitive element. For example, a working principle of the lens module 40 is as follows: Light reflected by a shot object generates an optical image through the optical lens, and the optical image is projected to the photosensitive surface of the photosensitive element. The photosensitive element converts the optical image into an electrical signal, that is, an analog image signal, and transmits the electrical signal to an analog-to-digital converter, to convert the electrical signal into a digital image signal and send the digital image signal to the image processor 30.

The photosensitive element (also referred to as an image sensor) is a semiconductor chip, includes hundreds of thousands to millions of photodiodes on a surface, and generates charges when being illuminated by light. The photosensitive element may be a charge-coupled device (charge-coupled device, CCD), or may be a complementary metal-oxide semiconductor (complementary metal-oxide semiconductor, CMOS) device. The charge-coupled device is made of a highly photosensitive semiconductor material, and can convert light into electric charges. The charge-coupled device includes many photosensitive units, usually in megapixels. When the surface of the charge-coupled device is illuminated by light, each photosensitive unit reflects electric charges on a component. Signals generated by all photosensitive units are combined to form a complete picture. The complementary metal-oxide semiconductor device is a semiconductor mainly made by using two elements: silicon and germanium, so that semiconductors of N (with negative electrons) and P (with positive electrons) levels coexist on the complementary metal-oxide semiconductor device. A current generated by these two complementary effects can be recorded and interpreted into an image by a processing chip.

The optical lens performs imaging mainly by using a refraction principle of a lens element. To be specific, scene light passes through the optical lens and form a clear image on a focal plane, and an image of a scene is recorded by using the photosensitive element located on the focal plane.

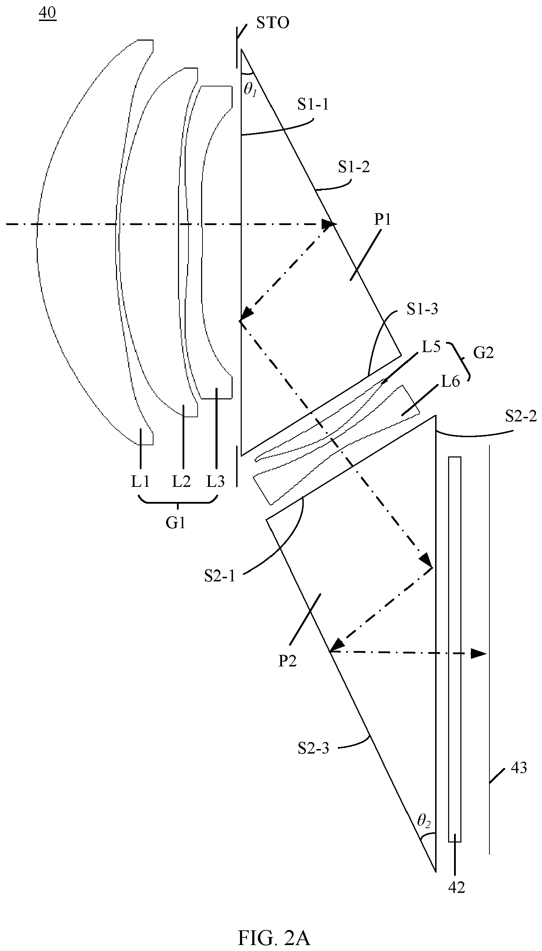

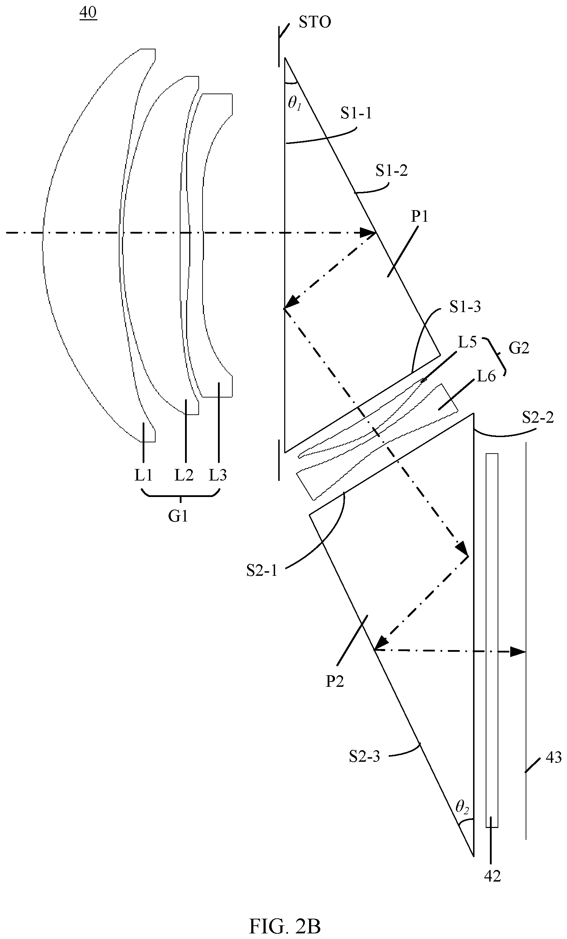

FIG. 2A and FIG. 2B are diagrams of a structure of another example of a lens module 40 according to an embodiment of this application. FIG. 2A is a status of the lens module 40 when shooting a long-distance object, and FIG. 2B is a status of the lens module when shooting a short-distance object.

The lens module 40 may include a first lens element group G1, a first prism P1, a second lens element group G2, a second prism P2, and an image sensor 43 from an object side to an image side along an optical axis. It should be understood that the first lens element group G1, the first prism P1, the second lens element group G2, and the second prism P2 may form an optical lens, and the image sensor 43 is located on the image side of the optical lens. The first lens element group G1 includes at least one optical lens element. The first lens element group G1 has a positive focal power, and is configured to receive and converge light. For example, the first lens element group G1 may include a first lens element L1, a second lens element L2, and a third lens element L3. The second lens element group G2 includes at least one optical lens element. The second lens element group G2 has a negative focal power. For example, the second lens element group G2 may include a fourth lens element L4 and a fifth lens element L5.

The first lens element group G1 can perform focusing and imaging on objects at different object distances. The first lens element group G1 is a moving lens element group. In other words, at least one optical lens element in the first lens element group G1 can move when the first lens element group G1 is driven by a driving element such as a motor. For example, the first lens element group G1 may be wrapped by a mechanical moving part (for example, a motor), and the mechanical moving part can change relative positions of the first lens element group G1 and the first prism P1, to perform imaging on objects at different object distances.

For example, as shown in FIG. 2A and FIG. 2B, in a focusing process in which the lens module 40 switches from a far object to a near object, the first lens element L1, the second lens element L2, and the third lens element L3 can move toward the object side along the optical axis under driving of the driving element such as a motor, to implement focusing.

The first prism P1 is located on an image side of the first lens element group G1. The first prism P1 may include at least three characteristic surfaces. For example, the first prism P1 includes a first surface S1-1, a second surface S1-2, and a third surface S1-3. Light can enter the first prism P1 from the first surface S1-1, and emitted out of the first prism P1 from the third surface S1-3. The first surface S1-1 is an incident surface (which may be referred to as a first incident surface), and is also a transmission and total internal reflection (TIR) surface. The first surface S1-1 transmits light received from the first lens element group G1 and reflects, by using the TIR, light received from the second surface S1-2 of the prism to the third surface S1-3. The second surface S1-2 is a reflective surface (which may be referred to as a first reflective surface) and is also a reflective surface coated with a lens coating. The second surface S1-2 reflects light received from the first surface S1-1 to the first surface S1-1 in the prism. The third surface S1-3 is an emergent surface (which may be referred to as a first emergent surface), and is also a transmission surface for transmitting the light received from the first surface S1-1. In short, the light enters the first prism P1 from the first surface S1-1, then is reflected by the second surface S1-2 to the first surface S1-1, and is totally internally reflected on the first surface S1-1. The reflected light is finally emitted from the first prism P1 through the third surface S1-3.

It should be understood that a first included angle *θ₁* between the first surface S1-1 and the second surface S1-2 (that is, the first incident surface S1-1 and the first reflective surface S1-2) is less than 45° (for example, *θ₁* is 25°). For example, a range of *θ₁* may be 0°<*θ₁*<10°, 10°≤*θ₁*<20°, 20°≤*θ₁*<25°, 25°≤*θ₁*<30°, 30°≤*θ₁*<35°, 35°≤*θ₁*<40°, or 40°≤*θ₁*<45°. For example, a range of *θ₁* may be 22°<*θ₁*<28°.

It should be noted that a value of the first included angle *θ₁* is related to a refractive index of the first prism P1. To meet total internal reflection, the first included angle *θ₁* and the refractive index *n₁* of the first prism P1 may satisfy the following relationship: *n*₁ ≥ 1/*sin*(2 * *θ*₁). In a conventional folding lens element system, an angle between the first surface of the first prism and the second surface of the first prism is usually 45°. In this application, an angle between the first surface S1-1 and the second surface S1-2 of the first prism P1 is set to be less than 45°. In other words, the angle between the first surface S1-1 and the second surface S1-2 of the first prism P1 is reduced, to help reduce a height of the lens element module in a Z direction (that is, a thickness direction of the electronic device). This helps reduce a size of the lens module 40.

The second prism P2 is located on an image side of the first prism P1, and the second prism P2 may include at least three characteristic surfaces. For example, the second prism P2 includes a fourth surface S2-1, a fifth surface S2-2, and a sixth surface S2-3. The fourth surface S2-1 is an incident surface (which may be referred to as a second incident surface) and is also a transmission surface. The fourth surface S2-1 transmits light received from the first prism P1 to the fifth surface S2-2 in the prism. The fifth surface S2-2 is an emergent surface (which may be referred to as a second emergent surface) and is also a transmission and TIR surface. The fifth surface S2-2 reflects, by using the TIR, the light received from the fourth surface S2-1 to the sixth surface S2-3 in the prism, and transmits light received from the sixth surface S2-3 in the prism to form an image in the image sensor 43. The sixth surface S2-3 is a reflective surface (which may be referred to as a second reflective surface) coated with a lens coating. The sixth surface S2-3 reflects light received from the fifth surface S2-2 to the fifth surface S2-2. In short, light enters the second prism P2 from the fourth surface S2-1, then is totally internally reflected by the fifth surface S2-2, is reflected to the fifth surface S2-2 through the sixth surface S2-3, and finally is emitted from the second prism P2 through the fifth surface S2-2.

It should be understood that a second included angle *θ₂* between the fifth surface S2-2 and the sixth surface S2-3 (that is, the second emergent surface S2-2 and the second reflective surface S2-3) is less than 45°. For example, *θ₂* is 25°, and the second included angle *θ₂* is equal to the first included angle *θ₁*. For example, a range of *θ₂* may be 0°<*θ₂*<10°, 10°≤*θ₂*<20°, 20°≤*θ₂*<25°, 25°≤*θ₂*<30°, 30°≤*θ₂*<35°, 35°≤*θ₂*<40°, or 40≤*θ₂*<45°. For example, a range of *θ₂* may be 22°<*θ₃*<28°.

It should be noted that a value of the second included angle *θ₂* is related to a refractive index of the second prism P2. To meet total internal reflection, the second included angle *θ₂* and the refractive index *n₂* of the second prism P2 satisfy the following relationship: *n*₂ ≥ 1/*sin*(2 * *θ*₂). In this application, an angle between the fifth surface S2-2 and the sixth surface S2-3 of the second prism P2 is set to be less than 45°, that is, the angle between the fifth surface S2-2 and the sixth surface S2-3 of the second prism P2 is reduced, to help reduce the height of the lens element module in the Z direction (that is, the thickness direction of the electronic device). This helps reduce a size of the lens module 40.

It should be noted that a larger refractive index of a prism material of the first prism P1 and the second prism P2 is better, a lower dispersion coefficient is better, and a prism with a higher refractive index is more likely to implement total internal reflection. Both a refractive index of the first prism P1 and a refractive index of the second prism P2 are greater than 1.5, and Abbe numbers of the two prisms are greater than 40.

It should be understood that the second lens element group G2 is disposed between the first prism P1 and the second prism P2, so that the lens module 40 can have good macro performance and can achieve an optical magnification of 0.1 time or more and a macro focusing distance less than 20 cm.

It should be understood that an optical axis of the third surface S1-3 of the first prism P1 coincides with an optical axis of the second lens element group G2, and an optical axis of the fourth surface S2-1 of the second prism P2 coincides with an optical axis of the second lens element group G2. In other words, a coaxial system is used in this application. The optical lens using the coaxial system does not generate an off-axis aberration relative to an off-axis system. Both a prism and a lens element in the coaxial system may be of a centrosymmetric structure. This facilitates production and manufacturing and has relatively strong implementability. In addition, it is easy to find central points of the prism and the lens element in the coaxial system relative to the off-axis system, to facilitate assembly of the lens elements and the prisms in the optical lens.

In some embodiments, as shown in FIG. 2A and FIG. 2B, the first surface S1-1, the second surface S1-2, and the third plane S1-3 of the first prism P1 may all be planes, and the fourth surface S2-1, the fifth surface S2-2, and the sixth surface S2-3 of the second prism P2 may all be planes.

In some other embodiments, the first surface S1-1 of the first prism P1 is a plane, the second surface S1-2 of the first prism P1 and/or the third plane S1-3 of the first prism P1 may be a surface having a focal power, the fifth surface S2-2 of the second prism P2 is a plane, and the fourth surface S2-1 and/or the sixth surface S2-3 may be a surface having a focal power. This is not limited in this application.

For example, in order that the first prism P1 has a surface having a focal power, a lens element in the second lens element group G2 may be fastened to the first emergent surface (that is, the third plane S1-3) of the first prism P1 by using a cementing process.

For example, in order that the second prism P2 has a surface having a focal power, a lens element in the second lens element group G2 may be fastened to the second incident surface (that is, the fourth surface S2-1) of the second prism P2 by using a cementing process.

In the lens module 40 shown in FIG. 2A and FIG. 2B, the image sensor 43 is located on an image side of the optical lens, and is disposed parallel to the fifth surface S2-2 (that is, the second emergent surface), so that the first prism P1 and the second prism P2 can fold an optical axis four times. The second surface S1-2 of the first prism P1 folds the optical axis once; the first surface S1-1 of the first prism P1 folds the optical axis for a second time; the fifth surface S2-2 of the second prism P2 folds the optical axis again; and then, the sixth surface S2-3 of the second prism P2 folds the optical axis for a fourth time. Light is finally incident to the image sensor 43. In this application, an aberration can be better corrected by setting a longer and more complex optical path.

In some other embodiments, the image sensor 43 is disposed in a tilt manner, that is, the image sensor 43 is located on the image side of the optical lens, and is disposed parallel to the sixth surface S2-3 (that is, the second reflective surface), so that the first prism P1 and the second prism P2 fold the optical axis three times. The second surface S1-2 of the first prism P1 folds the optical axis once; the first surface S1-1 of the first prism P1 folds the optical axis again; and then, the fifth surface S2-2 of the second prism P2 folds the optical axis for a third time. Light is finally incident to the image sensor 43.

It should be understood that the entire optical lens having a positive focal power indicates that an absolute value of a focal power of the first lens element group G1 is greater than an absolute value of a focal power of the second lens element group G2.

In an example, L1 may have a positive focal power, and at least one of L2 and L3 has a negative focal power. It should be understood that this disposing manner facilitates aberration correction of the optical lens, thereby achieving better imaging quality. It should be understood that, from a perspective of engineering implementation, a design in which L1 has a positive focal power, L2 has a positive focal power, and L3 has a negative focal power may be used.

For example, L4 has a positive focal power, and L5 has a negative focal power; or L4 has a negative focal power, L5 has a positive focal power, and a whole of L4 and L5 has a negative focal power (that is, the second lens element group G2). In this example, the focal powers of the two lens elements in the second lens element group are set to one positive focal power and one negative focal power, to facilitate aberration correction, so that the optical lens has better imaging quality.

Optionally, the optical lens may further include a third lens element group. The third lens element group may include at least one optical lens element. The third lens element group is located on an image side of the second prism P2, and is specifically located between the second prism P2 and the image sensor 43. The third lens element group may be configured to correct an aberration, to improve imaging quality.

It should be understood that the entire optical lens has a positive focal power, that is, has a light convergence function. In other words, when there is the third lens element group, a whole of the first lens element group, the second lens element group, and the third lens element group has a positive focal power. The third lens element group may have a positive focal power or a negative focal power. This is not limited in this application.

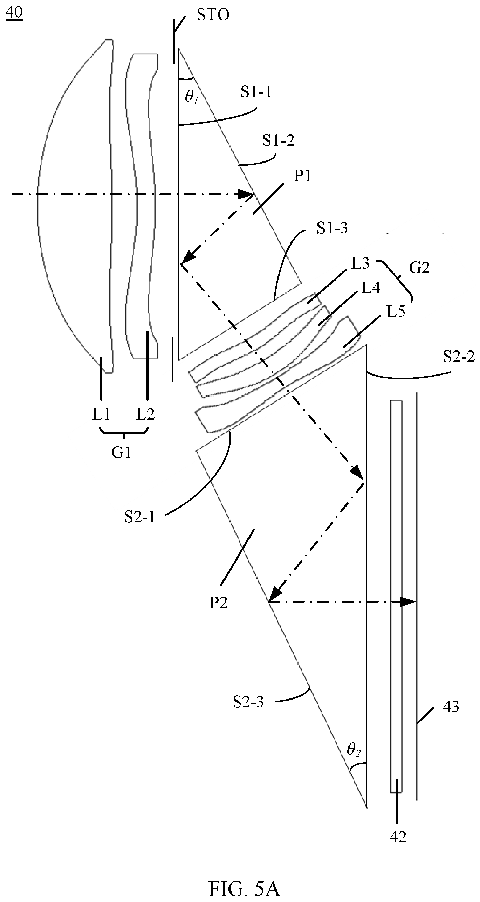

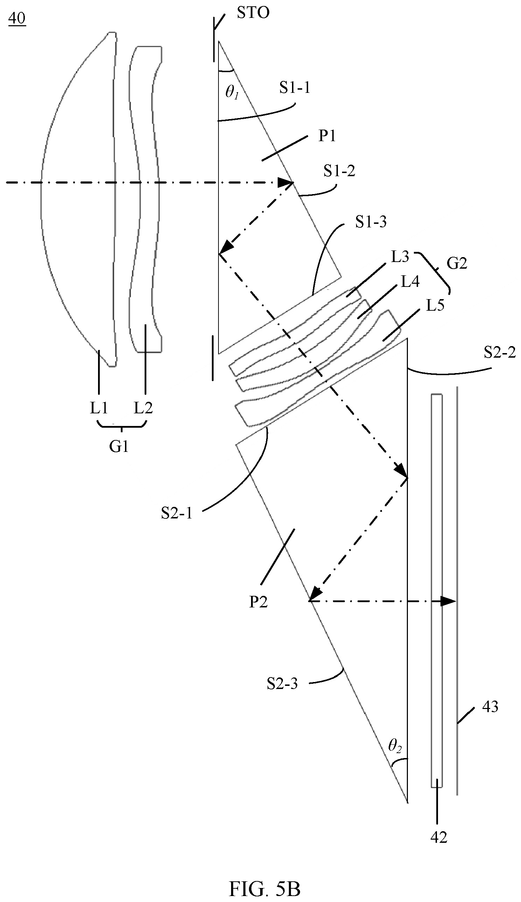

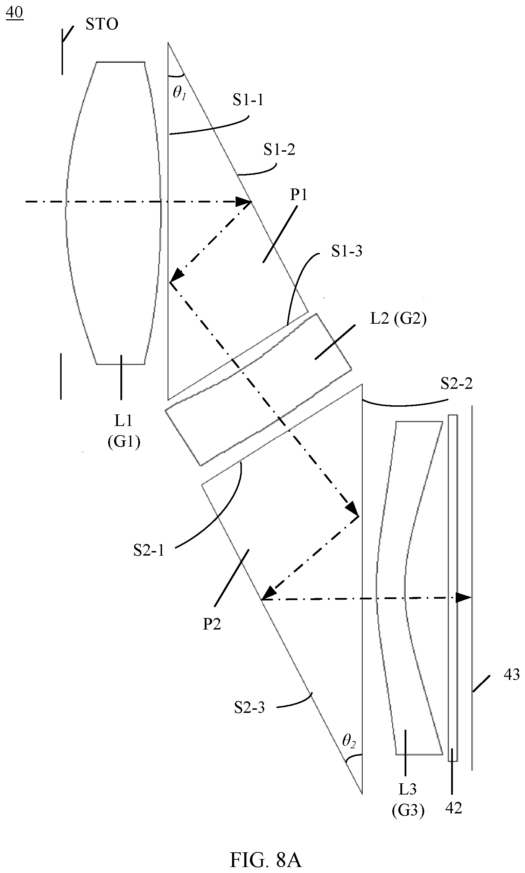

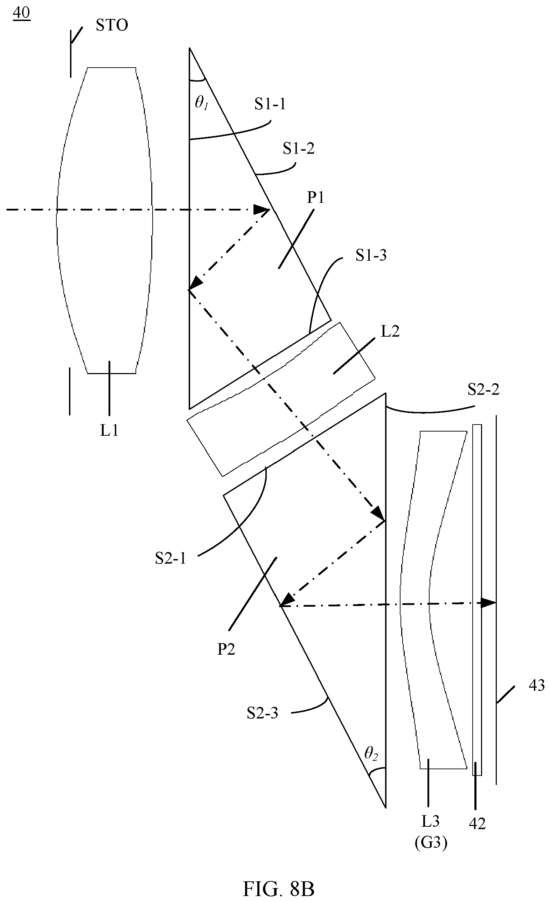

It should be noted that, to better perform aberration correction, a larger quantity of lens elements disposed in the optical lens is better. However, limited by a total system height of the optical lens and a size limitation of the electronic device, a quantity of lens elements included in the optical lens in this embodiment of this application may be 3 to 5. For example, the first lens element group G1 may include one lens element, and the second lens element group G2 may include four lens elements. For another example, the first lens element group G1 may include two lens elements, and the second lens element group G2 may include three lens elements. This example is described in detail with reference to FIG. 5A and FIG. 5B. For another example, the first lens element group G1 may include one lens element, the second lens element group G2 may include one lens element, and the third lens element group G3 may include one lens element. This example is described in detail with reference to FIG. 8A and FIG. 8B.

Optionally, the optical lens may further include an infrared filter 42. The infrared filter 42 is located on the image side of the second prism P2, and is specifically located between the second prism P2 and the image sensor 43. More specifically, the infrared filter 42 is located between the fifth surface S2-2 of the second prism P2 and the image sensor 43. The infrared filter 42 may be configured to filter out an unnecessary optical signal. In some other embodiments, an infrared filter may not be separately disposed in the optical lens. For example, an infrared cut-off film layer is disposed on a light outlet surface of the fifth surface S2-2 of the second prism P2, to filter out an unnecessary optical signal. Alternatively, an absorbent material is added to a light outlet surface of the fifth surface S2-2 of the second prism P2, to filter out an unnecessary optical signal.

Optionally, the optical lens may further include an aperture stop STO. As shown in FIG. 2A and FIG. 2B, the aperture stop STO may be disposed between the first lens element group G1 and the first prism P1. Specifically, the aperture stop STO may be disposed between the fourth lens element L4 and the first surface S1-1 of the first prism P1. In some other embodiments, the aperture stop STO may be further located on the object side of the first lens element group G1, to reduce a total system height of the optical lens. In some other embodiments, the aperture stop STO may be further located between the first prism P1 and the second lens element group G2, or located between the second lens element group G2 and the second prism P2. It should be understood that the aperture stop STO may be configured to adjust an aperture and filter out clutter light, to improve imaging quality of the lens module 40.

The aperture stop STO may be of an isolated ring structure or a variable blade structure; or the aperture stop STO may be implemented by using a surface spraying process, for example, the aperture stop STO is formed by spraying a light shielding material on a lens element. A position of the aperture stop STO may be fixed or may be variable. For example, the position of the aperture stop STO is variable, and the position of the aperture stop STO may be adjusted based on a focusing case, to be located between different lens elements.

With reference to parameter data and a simulation result, the following presents a possible design manner of the lens module 40 shown in FIG. 2A and FIG. 2B.

For example, as shown in FIG. 2A and FIG. 2B, the lens module 40 includes the first lens element group G1, the first prism P1, the second lens element group G2, the second prism P2, an infrared filter 42, and the image sensor 43 that are sequentially arranged from the object side to the image side. The first lens element group G1 includes the first lens element L1, the second lens element L2, and the third lens element L3, and the second lens element group includes the fourth lens element L4 and the fifth lens element L5. The refractive index *n₁* of the first prism P1 is 1.70. The first included angle *θ₁* between the first surface S1-1 and the second surface S1-2 of the first prism P1 is 25°. The refractive index *n₂* of the second prism P2 is 1.69. The included angle *θ₂* between the fifth surface S2-2 and the sixth surface S2-3 of the second prism P2 is 25°.

The first lens element group G1 may be wrapped by a mechanical moving part (for example, a motor), and perform imaging on objects at different object distances by changing relative positions of the first lens element group G1 and the first prism P1. A nearest focusing distance is 20 cm. The following describes related parameters of the lens module 40 shown in FIG. 2A and FIG. 2B with reference to Table 1A and Table 1B.

**Table 1A Basic parameters of the lens module**

| Optical parameters | |
|---|---|
| Focal length f/mm | 13.01 |
| F# | 2.171 |
| IMH/mm | 3.6 |
| FOV/degree | 27 |
| Total system height/mm | 8.09 |
| System shoulder height/mm | 3.89 |
| System length/mm | 13.4 |
| Nearest focusing object distance/mm | 200 |

It should be noted that, when the image sensor 43 is vertically disposed, the "total system height" in Table 1A is a vertical distance from the first surface of the first lens element (that is, L1) to the image sensor 43, the "system shoulder height" is a vertical distance from the first surface S1-1 of the first prism P1 to the image sensor 43, and the "system length" is a longest distance of the lens module 40 in a length direction of the electronic device, that is, a vertical distance from the top of the first lens element L1 to the bottom of the image sensor 43.

It can be learned from Table 1A that, when the lens module 40 shown in FIG. 2A and FIG. 2B is used, the total system height of the lens module 40 is 8.09 mm, the system shoulder height is 3.89 mm, and the system length is 13.4 mm. Compared with a 45° prism solution, the total system height, the system shoulder height, and the system length are all reduced to some extent, to reduce a size of the lens module. In addition, when the lens module 40 shown in FIG. 2A and FIG. 2B is used, the nearest focusing object distance of the lens module 40 can reach 200 mm, to implement good macro effect.

**Table 1B Parameters of the moving part of the lens module at different object distances**

| Object distance (mm) | Moving part | Lens element | Surface | Center thickness (mm) |
|---|---|---|---|---|
| Unlimited | First lens element group G1 | L3 | S2 | 0.569 |
| 200 | | | | 1.253 |

It can be learned from Table 1B that, at an infinite object distance, a distance between the second surface S1-2 of the third lens element L3 in the first lens element group G1 and the first surface S1-1 of the first prism P1 is 0.569 mm, and the second surface S1-2 is a surface that is of the third lens element L3 and that is close to the first prism P1. When the lens module 40 is adjusted from an infinite object distance to an object distance of 200 mm, the first lens element group G1 moves toward a side away from the first prism P1 (that is, moves toward the object side). At the object distance of 200 mm, the distance between the second surface S1-2 of the third lens element L3 and the first surface S1-1 of the first prism P1 is 1.253 mm.

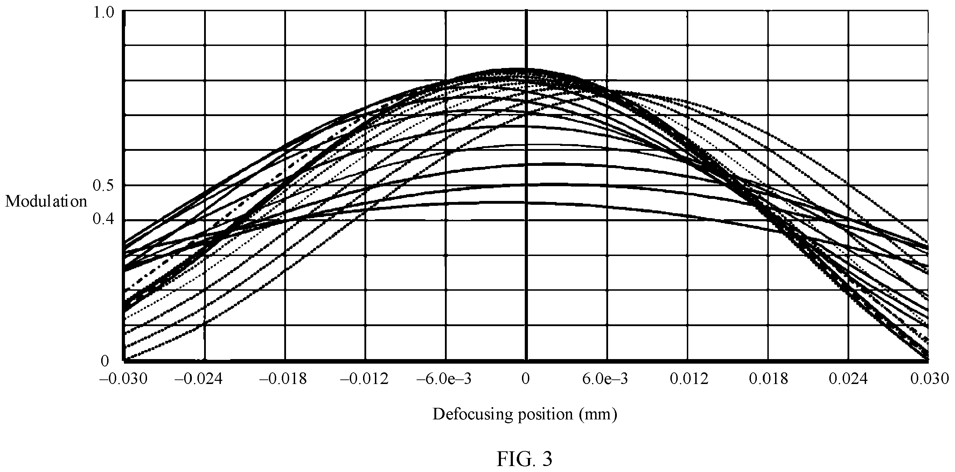

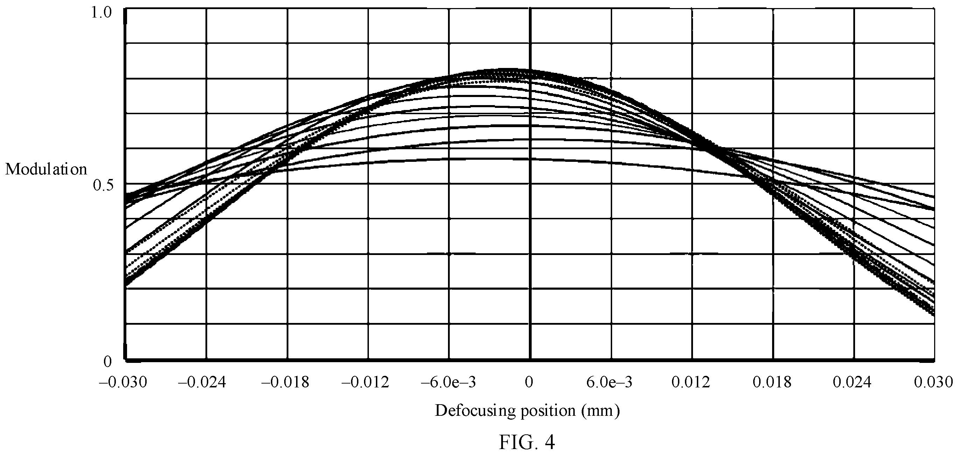

FIG. 3 and FIG. 4 show modulation transfer functions (modulation transfer function, MTF) of the lens module 40 in FIG. 2A and FIG. 2B at the infinite object distance and at the 200 mm object distance. FIG. 3 is a defocusing MTF curve at the infinite object distance when a spatial frequency is 125 lp/mm according to an embodiment. It can be learned from FIG. 3 that the modulation transfer function (MTF) in different fields of view at an infinite object distance is greater than 0.4 in both a sagittal direction and a meridional direction. The result shows that the lens module 40 in FIG. 2A and FIG. 2B can implement high-quality imaging at an infinite object distance. FIG. 4 is a defocusing MTF curve at the object distance of 200 mm when a spatial frequency is 89 lp/mm according to an embodiment. It can be learned from FIG. 4 that the modulation transfer function (MTF) in different fields of view at a macro distance of 200 mm is greater than 0.5 in both a sagittal direction and a meridional direction. The result shows that the lens module 40 in FIG. 2A and FIG. 2B can implement high-quality macro imaging.

FIG. 5A and FIG. 5B are diagrams of a structure of another example of a lens module 40 according to an embodiment of this application. FIG. 5A is a status of the lens module 40 when shooting a long-distance object, and FIG. 5B is a status of the lens module when shooting a short-distance object.

It should be noted that the lens module shown in FIG. 5A and FIG. 5B has a structure similar to that of the lens module shown in FIG. 2A and FIG. 2B, and a main difference between the lens module shown in FIG. 5A and FIG. 5B and the lens module shown in FIG. 2A and FIG. 2B lies in a quantity of lens elements included in the first lens element group G1 and a quantity of lens elements included in the second lens element group G2. Therefore, for other related descriptions of the first lens element group G1, the second lens element group G2, the first prism P1, and the second prism P2, refer to related descriptions in FIG. 2A and FIG. 2B. Details are not described herein again. The following describes the differences.

As shown in FIG. 5A and FIG. 5B, the lens module 40 may include a first lens element group G1, a first prism P1, a second lens element group G2, a second prism P2, an infrared filter 42, and an image sensor 43 from an object side to an image side along an optical axis. It should be understood that the first lens element group G1, the first prism P1, the second lens element group G2, and the second prism P2 may form an optical lens, and the image sensor 43 is located on the image side of the optical lens. The first lens element group G1 includes at least one optical lens element. The first lens element group G1 has a positive focal power, and is configured to receive and converge light. For example, the first lens element group G1 may include a first lens element L1 and a second lens element L2. The second lens element group G2 includes at least one optical lens element. The second lens element group G2 has a negative focal power. For example, the second lens element group G2 may include a third lens element L3, a fourth lens element L4, and a fifth lens element L5.

In an example, L1 may have a positive focal power, L2 may have a negative focal power, and a whole of L1 and L2 (that is, the first lens element group G1) has a positive focal power. In this example, the positive focal power is set for L1, and the negative focal power is set for L2. This facilitates control of an aberration of light passing through the first lens element group G1. In this way, it is easier to perform aberration correction by using the first lens element group G1, so that the optical lens has better imaging quality. In another example, L1 may have a positive focal power, and L2 may also have a positive focal power. This is not limited in this application.

It should be understood that at least one of the three lens elements in the second lens element group G2 has a positive focal power, and at least one of the three lens elements has a negative focal power. Specific focal powers of L3, L4, and L5 are not limited. For example, L3 may have a positive focal power, L4 may have a negative focal power, L5 may have a negative focal power (or a positive focal power), and a whole (that is, the second lens element group G2) of L3, L4, and L5 has a negative focal power.

Two lens elements are disposed in the first lens element group G1 in the lens module shown in FIG. 5A and FIG. 5B. In comparison with a solution in which the first lens element group G1 includes three lens elements (the lens module shown in FIG. 2A and FIG. 2B), this can well correct an aberration, and can further reduce a size of an optical lens.

With reference to parameter data and a simulation result, the following presents a possible design manner of the lens module 40 shown in FIG. 5A and FIG. 5B.

For example, as shown in FIG. 5A and FIG. 5B, the lens module 40 includes the first lens element group G1, the first prism P1, the second lens element group G2, the second prism P2, an infrared filter 42, and the image sensor 43 that are sequentially arranged from the object side to the image side. The first lens element group G1 includes the first lens element L1 and the second lens element L2, and the second lens element group includes the third lens element L3, the fourth lens element L4, and the fifth lens element L5. The refractive index *n₁* of the first prism P1 is 1.74. The first included angle *θ₁* between the first surface S1-1 and the second surface S1-2 of the first prism P1 is 25°. The refractive index *n₂* of the second prism P2 is 1.70. The included angle *θ₂* between the fifth surface S2-2 and the sixth surface S2-3 of the second prism P2 is 25°.

The first lens element group G1 may be wrapped by a mechanical moving part (for example, a motor), and is configured to perform imaging on objects at different object distances by changing relative positions of the first lens element group G1 and the first prism P1. A nearest focusing distance is 6 cm. The following describes related parameters of the lens module 40 shown in FIG. 5A and FIG. 5B with reference to Table 2A and Table 2B.

**Table 2A Basic parameters of the lens module**

| Optical parameters | |
|---|---|
| Focal length f/mm | 13.27 |
| F# | 1.171 |
| IMH/mm | 3.6 |
| FOV/degree | 26 |
| Total system height/mm | 8.22 |
| System shoulder height/mm | 4.3 |
| System length/mm | 13.0 |
| Nearest focusing object distance/mm | 60 |

It can be learned from Table 2A that, when the lens module 40 shown in FIG. 5A and FIG. 5B is used, the total system height of the lens module 40 is 8.22 mm, the system shoulder height is 4.3 mm, and the system length is 13.0 mm. Compared with a 45° prism solution, the total system height, the system shoulder height, and the system length are all reduced to some extent, to reduce a size of the lens module. In addition, when the lens module 40 shown in FIG. 2A and FIG. 2B is used, the nearest focusing object distance of the lens module 40 can reach 60 mm, to implement good macro effect.

**Table 2B Parameters of the moving part of the lens module at different object distances**

| Object distance (mm) | Moving part | Lens element | Surface | Center thickness (mm) |
|---|---|---|---|---|
| Unlimited | First lens element group G1 | L2 | S2 | 0.403 |
| 60 | | | | 0.896 |

It can be learned from Table 2B that, at an infinite object distance, a distance between the second surface S1-2 of the second lens element L2 in the first lens element group G1 and the first surface S1-1 of the first prism P1 is 0.403 mm, and the second surface S1-2 is a surface that is of the second lens element L2 and that is close to the first prism P1. When the lens module 40 is adjusted from an infinite object distance to an object distance of 200 mm, the first lens element group G1 moves toward a side away from the first prism P1 (that is, moves toward the object side). At the object distance of 60 mm, the distance between the second surface S1-2 of the second lens element L2 and the first surface S1-1 of the first prism P1 is 0.896 mm.

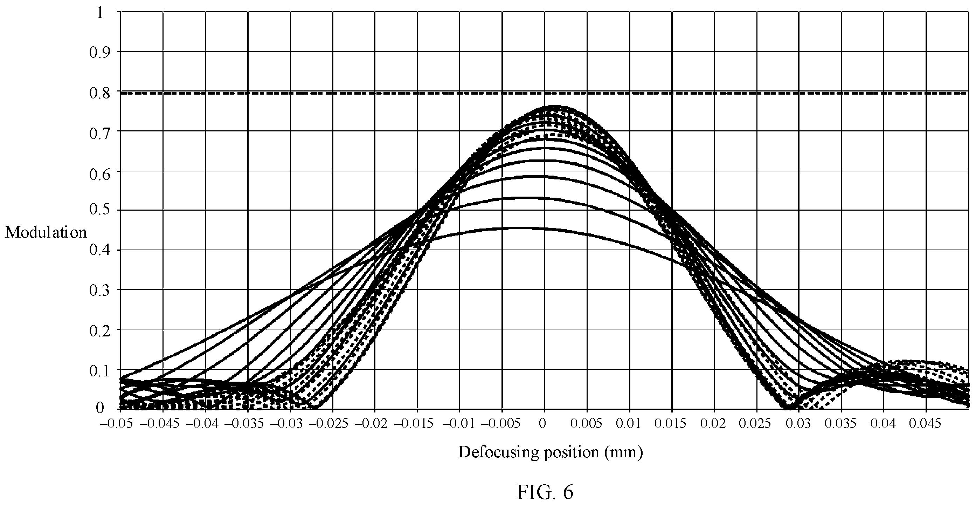

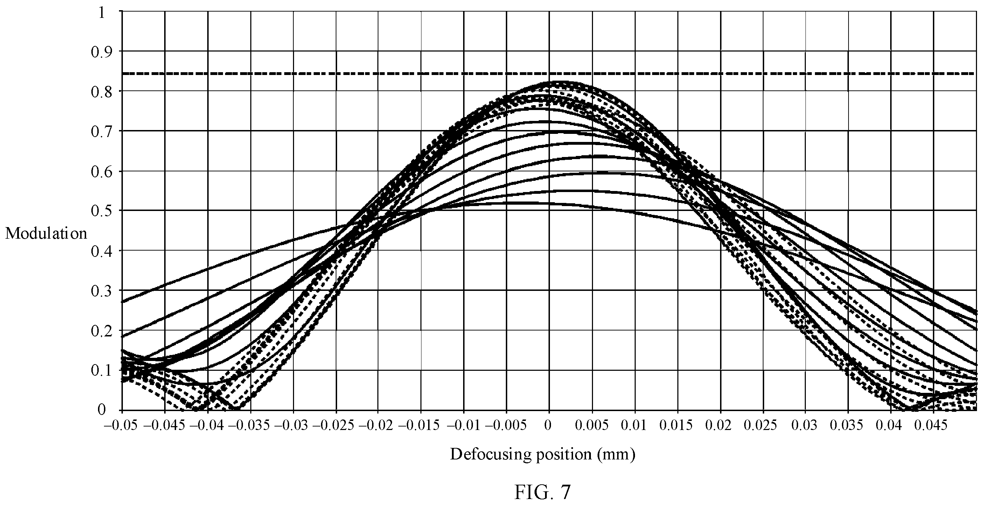

FIG. 6 and FIG. 7 show modulation transfer functions MTFs of the lens module 40 in FIG. 5A and FIG. 5B at an infinite object distance and at an object distance of 60 mm. FIG. 6 is a defocusing MTF curve at the infinite object distance when a spatial frequency is 125 lp/mm according to an embodiment. It can be learned from FIG. 6 that the modulation transfer function (MTF) in different fields of view at an infinite object distance is greater than 0.45 in both a sagittal direction and a meridional direction. The result shows that the lens module 40 in FIG. 5A and FIG. 5B can implement high-quality imaging at an infinite object distance. FIG. 7 is a defocusing MTF curve at the object distance of 60 mm when a spatial frequency is 89 lp/mm according to an embodiment. It can be learned from FIG. 7 that the modulation transfer function (MTF) in different fields of view at a macro distance of 60 mm is greater than 0.5 in both a sagittal direction and a meridional direction. The result shows that the lens module 40 in FIG. 5A and FIG. 5B can implement high-quality macro imaging.

FIG. 8A and FIG. 8B are diagrams of a structure of another example of a lens module 40 according to an embodiment of this application. FIG. 8A is a status of the lens module 40 when shooting a long-distance object, and FIG. 8B is a status of the lens module when shooting a short-distance object.

It should be noted that the lens module shown in FIG. 8A and FIG. 8B has a structure similar to that of the lens module shown in FIG. 2A and FIG. 2B, and a main difference between the lens module shown in FIG. 8A and FIG. 8B and the lens module shown in FIG. 2A and FIG. 2B lies in a quantity of lens elements included in the first lens element group G1 and a quantity of lens elements included in the second lens element group G2. Therefore, for other related descriptions of the first lens element group G1, the second lens element group G2, the first prism P1, and the second prism P2, refer to related descriptions in FIG. 2A and FIG. 2B. Details are not described herein again. The following describes the differences.

As shown in FIG. 8A and FIG. 8B, the lens module 40 may include a first lens element group G1, a first prism P1, a second lens element group G2, a second prism P2, a third lens element group G3, an infrared filter 42, and an image sensor 43 from an object side to an image side along an optical axis. It should be understood that the first lens element group G1, the first prism P1, the second lens element group G2, the second prism P2, and the third lens element group G3 may form an optical lens, and the image sensor 43 is located on an image side of an optical lens.

The first lens element group G1 may include a first lens element L1, the second lens element group G2 may include a second lens element L2, and the third lens element group G3 may include a third lens element L3. In addition, the first lens element L1 has a positive focal power, and is configured to receive light and converge the light. The second lens element L2 has a negative focal power. The third lens element L3 may have a positive focal power or a negative focal power. The third lens element L3 may be configured to correct an aberration, to improve imaging quality.

It should be understood that the entire optical lens has a positive focal power, that is, has a light convergence function. In other words, a whole of the first lens element group G1, the second lens element group G2, and the third lens element group G3 has a positive focal power.

In the lens module 40 shown in FIG. 8A and FIG. 8B, an aperture stop STO may be disposed on the object side of the first lens element group G1. In another embodiment, the aperture stop STO may be disposed between the first lens element group G1 and the first prism P1, or the aperture stop STO may be disposed between the first prism P1 and the second lens element group G2, or the aperture stop STO may be disposed between the second lens element group G2 and the second prism P2, or the aperture stop STO may be disposed between the second prism P2 and the third lens element group G3. This is not limited in this application.

With reference to parameter data and a simulation result, the following presents a possible design manner of the lens module 40 shown in FIG. 8A and FIG. 8B.

For example, as shown in FIG. 8A and FIG. 8B, the lens module 40 includes a first lens element group G1, a first prism P1, a second lens element group G2, a second prism P2, a third lens element group G3, an infrared filter 42, and the image sensor 43 that are sequentially arranged from an object side to an image side. The first lens element group G1 includes a first lens element L1, the second lens element group G2 includes a second lens element L2, and the third lens element group G3 includes a third lens element L3. A refractive index *n₁* of the first prism P1 is 1.67. A first included angle *θ₁* between a first surface S1-1 and a second surface S1-2 of the first prism P1 is 25°. A refractive index *n₂* of the second prism P2 is 1.67. An included angle *θ₂* between the fifth surface S2-2 and the sixth surface S2-3 of the second prism P2 is 25°.

The first lens element group G1 may be wrapped by a mechanical moving part (for example, a motor), and is configured to perform imaging on objects at different object distances by changing relative positions of the first lens element group G1 and the first prism P1. A nearest focusing distance is 20 cm. The following describes related parameters of the lens module 40 shown in FIG. 8A and FIG. 8B with reference to Table 3A and Table 3B.

**Table 3A Basic parameters of the lens module**

| Optical parameters | |
|---|---|
| Focal length f/mm | 13.84 |
| F# | 2.22 |
| IMH/mm | 3.6 |
| FOV/degree | 26 |
| Total system height/mm | 9.39 |
| System shoulder height/mm | 6.3 |
| System length/mm | 14.1 |
| Nearest focusing object distance/mm | 200 |

It can be learned from Table 3A that, when the lens module 40 shown in FIG. 8A and FIG. 8B is used, the total system height of the lens module 40 is 9.39 mm, the system shoulder height is 6.3 mm, and the system length is 14.1 mm. Compared with a 45° prism solution, the total system height, the system shoulder height, and the system length are all reduced to some extent, to reduce a size of the lens module. In addition, when the lens module 40 shown in FIG. 8A and FIG. 8B is used, the nearest focusing object distance of the lens module 40 can reach 200 mm, to implement good macro effect.

**Table 3B Parameters of the moving part of the lens module at different object distances**

| Object distance (mm) | Moving part | Lens element | Surface | Center thickness (mm) |
|---|---|---|---|---|
| Unlimited | First lens element group G1 | L1 | S2 | 0.35 |
| 200 | | | | 0.895 |

It can be learned from Table 4B that, at an infinite object distance, a distance between the second surface S1-2 of the first lens element L1 in the first lens element group G1 and the first surface S1-1 of the first prism P1 is 0.35 mm, and the second surface S1-2 is a surface that is of the first lens element L1 and that is close to the first prism P1. When the lens module 40 is adjusted from an infinite object distance to an object distance of 200 mm, the first lens element L1 moves toward a side away from the first prism P1 (that is, moves toward the object side). At the object distance of 200 mm, the distance between the second surface S1-2 of the first lens element L1 and the first surface S1-1 of the first prism P1 is 0.895 mm.

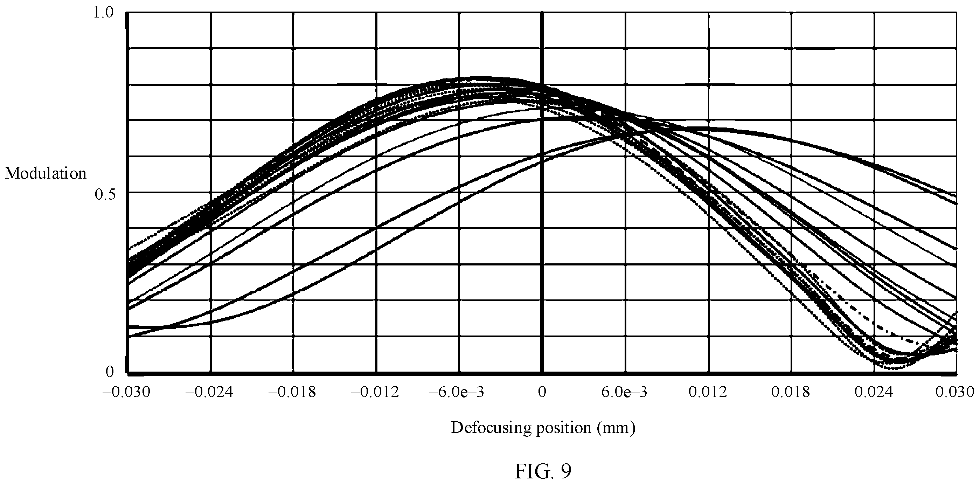

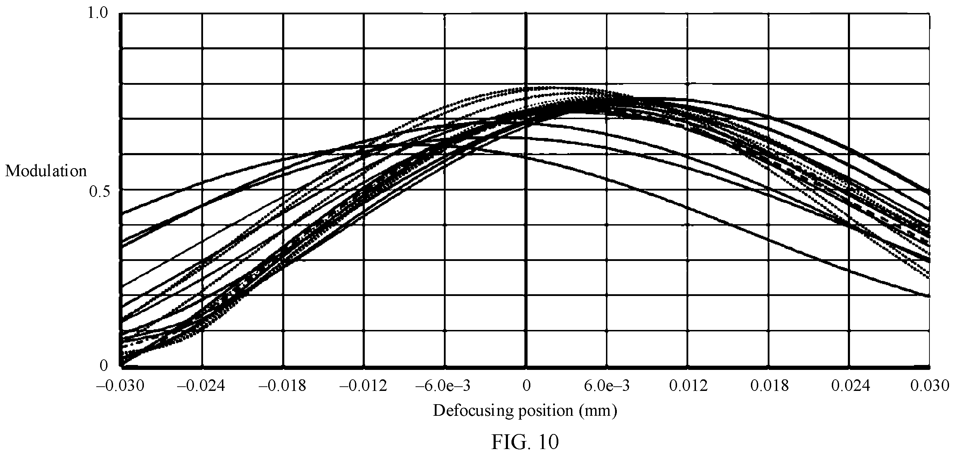

FIG. 9 and FIG. 10 show modulation transfer functions MTFs of the lens module 40 in FIG. 8A and FIG. 8B at an infinite object distance and at an object distance of 200 mm. FIG. 9 is a defocusing MTF curve at the infinite object distance when a spatial frequency is 125 lp/mm according to an embodiment. It can be learned from FIG. 9 that the modulation transfer function (MTF) in different fields of view at an infinite object distance is greater than 0.6 in both a sagittal direction and a meridional direction. The result shows that the lens module 40 in FIG. 8A and FIG. 8B can implement high-quality imaging at an infinite object distance. FIG. 10 is a defocusing MTF curve at the object distance of 200 mm when a spatial frequency is 89 lp/mm according to an embodiment. It can be learned from FIG. 10 that the modulation transfer function (MTF) in different fields of view at a macro distance of 200 mm is greater than 0.6 in both a sagittal direction and a meridional direction. The result shows that the lens module 40 in FIG. 8A and FIG. 8B can implement high-quality macro imaging.

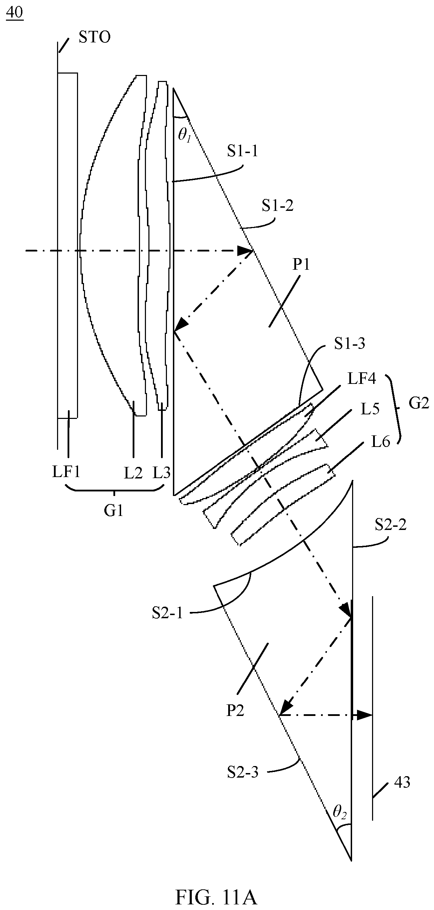

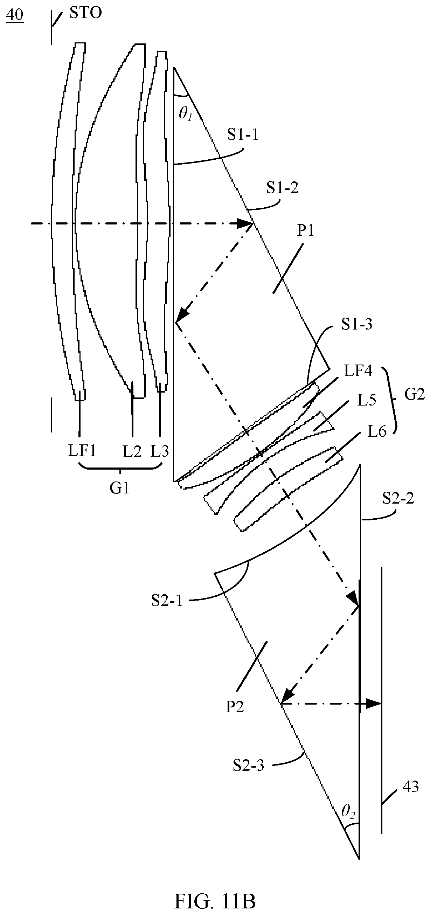

FIG. 11A and FIG. 11B are diagrams of a structure of another example of a lens module 40 according to an embodiment of this application. FIG. 11A is a status of the lens module 40 when shooting a long-distance object, and FIG. 11B is a status of the lens module when shooting a short-distance object.

It should be noted that a structure of the lens module shown in FIG. 11A and FIG. 11B is similar to that of the lens module shown in FIG. 2A and FIG. 2B. Therefore, for other related descriptions of the first lens element group G1, the second lens element group G2, the first prism P1, and the second prism P2, refer to related descriptions in FIG. 2A and FIG. 2B. Details are not described herein again. The following describes the differences.

The lens module 40 may include a first lens element group G1, a first prism P1, a second lens element group G2, a second prism P2, and an image sensor 43 from an object side to an image side along an optical axis. It should be understood that the first lens element group G1, the first prism P1, the second lens element group G2, and the second prism P2 may form an optical lens, and the image sensor 43 is located on the image side of the optical lens.

For example, the first lens element group G1 may include at least one variable-focus lens element, and in a focusing process in which the optical lens switches from a far object to a near object, a focal power of the variable-focus lens element in the first lens element group G1 increases.

For example, the second lens element group G2 may also include at least one variable-focus lens element, and the variable-focus lens element in the second lens element group G2 is configured to correct an additional aberration brought by the variable-focus lens element in the first lens element group G1.

In some embodiments, as shown in FIG. 11A and FIG. 11B, the first lens element group G1 may include a first variable-focus lens element LF1, a second lens element L2, and a third lens element L3, and the second lens element group G2 may include a fourth variable-focus lens element LF4, a fifth lens element L5, and a sixth lens element L6. It should be understood that the variable-focus lens element is a lens element whose lens element surface shape may be changed in an electric driving manner, an acoustic driving manner, a magnetic driving manner, or another driving manner.

Surface shapes and thicknesses of the first variable-focus lens element LF1 in the first lens element group G1 and the fourth variable-focus lens element LF4 in the second lens element group G2 may be changed in an electric driving manner, an acoustic driving manner, a magnetic driving manner, or another driving manner, to perform imaging on objects at different object distances.

It should be noted that, in the structure shown in FIG. 11A and FIG. 11B, the lens module 40 implements focusing based on a focal power, a curvature radius, a refractive index, and the like of a variable-focus lens element. However, in another embodiment, the lens module 40 may implement focusing by moving the first lens element group G1.

With reference to parameter data and a simulation result, the following presents a possible design manner of the lens module 40 shown in FIG. 11A and FIG. 11B.

For example, as shown in FIG. 11A and FIG. 11B, the lens module 40 includes a first lens element group G1, a first prism P1, a second lens element group G2, a second prism P2, and an image sensor 43 that are sequentially arranged from an object side to an image side. The first lens element group G1 may include a first variable-focus lens element LF1, a second lens element L2, and a third lens element L3, and the second lens element group G2 may include a fourth variable-focus lens element LF4, a fifth lens element L5, and a sixth lens element L6. A refractive index *n₁* of the first prism P1 is 1.75. A first included angle *θ₁* between a first surface S1-1 and a second surface S1-2 of the first prism P1 is 25°. A refractive index *n₂* of the second prism P2 is 1.73. An included angle *θ₂* between the fifth surface S2-2 and the sixth surface S2-3 of the second prism P2 is 25°.

Surface shapes and thicknesses of the first variable-focus lens element LF1 in the first lens element group G1 and the fourth variable-focus lens element LF4 in the second lens element group G2 may be changed in an electric driving manner, an acoustic driving manner, a magnetic driving manner, or another driving manner, to perform imaging on objects at different object distances. A nearest focusing distance is 20 cm. The following describes related parameters of the lens module 40 shown in FIG. 11A and FIG. 11B with reference to Table 4A.

**Table 4A Basic parameters of the lens module**

| Optical parameters | |
|---|---|
| Focal length f/mm | 23.0 |
| F# | 2.02 |
| IMH/mm | 6.26 |
| FOV/degree | 30 |
| Total system height/mm | 10.59 |
| System shoulder height/mm | 6.69 |
| System length/mm | 25.05 |
| Nearest focusing object distance/mm | 200 |

It can be learned from Table 4A that, when the lens module 40 shown in FIG. 11A and FIG. 11B is used, the total system height of the lens module 40 is 10.59 mm, the system shoulder height is 6.69 mm, and the system length is 25.05 mm. Compared with a 45° prism solution, the total system height, the system shoulder height, and the system length are all reduced to some extent, to reduce a size of the lens module. In addition, when the lens module 40 shown in FIG. 11A and FIG. 11B is used, the nearest focusing object distance of the lens module 40 can reach 200 mm, to implement good macro effect.

In this embodiment of this application, all even aspheric surface shapes z may be limited by using but not limited to the following aspheric curve equation: $z = \frac{{cr}^{2}}{1 + \sqrt{1 - {kc}^{2} {r}^{2}}} + {\sum }_{i} {A}_{i} {r}^{i}$

Herein, z is a relative distance between a point on an aspheric surface at a distance of *r* to an optical axis and an intersecting tangent plane tangent to the optical axis of the aspheric surface; *r* is a vertical distance between a point on an aspheric curve and the optical axis; *c* is a curvature; *k* is a cone coefficient; and *Aᵢ* is an *i*^{th}-order aspheric coefficient. Table 4B and Table 4C show a conic constant *k* and an aspheric coefficient corresponding to a surface of a variable-focus lens element in Table 1. Herein, A₄, A₆, A₈, ..., and A₃₀ respectively represent 4^{th}-order aspheric coefficient, a 6^{th}-order aspheric coefficient, an 8^{th}-order aspheric coefficient, ..., and 30^{th}-order aspheric coefficient.

**Table 4B Parameters of the moving part of the lens module at different object distances**

| Object distance (mm) | Moving part | Lens element | Surface | Center thickness (mm) | Curvature radius | Conic coefficient |
|---|---|---|---|---|---|---|
| Unlimited | First lens element group G1 | LF1 | S1 | 0.659 | 307.808 | 0 |
| | | | S2 | 0.100 | 403.045 | 0 |
| | Second lens element group G2 | LF4 | S1 | 0.769 | 23.448 | 0 |
| | | | S2 | 0.070 | -8.945 | 0 |
| 200 | First lens element group G1 | LF1 | S1 | 0.659 | 22.417 | 0 |
| | | | S2 | 0.100 | 41.340 | 0 |
| | Second lens element group G2 | LF4 | S1 | 0.769 | 51.996 | 0 |
| | | | S2 | 0.070 | -8.226 | 0 |

It can be learned from Table 4B that, when the lens module 40 is adjusted from the infinite object distance to the object distance of 200 mm, the first lens element group G1 and the second lens element group G2 do not move, but curvature radii of the first variable-focus lens element LF1 in the first lens element group G1 and the fourth variable-focus lens element LF4 in the second lens element group G2 may change, and focal powers of the two variable-focus lens elements change, to implement focusing.

**Table 4C Aspheric coefficients of the variable-focus lens element**

| Object distance (mm) | Variable-focus lens element | Surface number | A4 | A6 | A8 | A10 | A12 | A14 | A16 |
|---|---|---|---|---|---|---|---|---|---|
| Unlimited | LF1 | S1 | - 3.549E-05 | - 2.872E-07 | 5.844E-11 | 1.287E-11 | - 9.837E-13 | - 3.589E-14 | - 1.641E-15 |
| | | S2 | - 2.362E-05 | - 2.012E-07 | 1.578E-09 | 5.267E-11 | - 9.715E-13 | - 9.377E-14 | - 2.421E-15 |
| | LF4 | S1 | - 1.850E-04 | 2.472E-03 | - 7.280E-03 | 1.061E-02 | - 9.755E-03 | 6.076E-03 | - 2.657E-03 |
| | | S2 | 1.460E-02 | - 1.641E-02 | 1.366E-02 | - 7.731E-03 | 2.137E-03 | 3.767E-04 | - 6.297E-04 |
| 200 | LF1 | S1 | 4.088E-05 | 4.456E-07 | - 4.079E-09 | - 2.879E-10 | - 8.169E-12 | - 1.653E-13 | - 2.700E-15 |
| | | S2 | 5.089E-05 | 4.768E-07 | 4.086E-09 | 2.750E-10 | 7.957E-12 | 2.051E-13 | 4.916E-15 |
| | LF4 | S1 | 5.361E-04 | 1.769E-03 | 4.257E-03 | 5.105E-03 | 3.933E-03 | 2.087E-03 | 7.892E-04 |
| | | S2 | 1.607E-02 | 2.145E-02 | 2.383E-02 | 2.047E-02 | 1.280E-02 | 5.862E-03 | 1.990E-03 |
| Object distance (mm) | Variable-focus lens element | Surface number | A18 | A20 | A22 | A24 | A26 | A28 | A30 |
| Unlimited | LF1 | S1 | 1.181E-17 | 3.832E-19 | / | / | / | / | / |
| | | S2 | 2.764E-17 | 8.652E-19 | / | / | / | / | / |
| | LF4 | S1 | 8.297E-04 | 1.859E-04 | 2.967E-05 | 3.287E-06 | 2.403E-07 | 1.042E-08 | 2.030E-10 |
| | | S2 | 2.966E-04 | 8.337E-05 | 1.551E-05 | 1.935E-06 | 1.562E-07 | 7.396E-09 | 1.561E-10 |
| 200 | LF1 | S1 | 2.645E-17 | 2.336E-18 | / | / | / | / | / |
| | | S2 | 8.820E-17 | 2.442E-19 | / | / | / | / | / |
| | LF4 | S1 | 2.161E-04 | 4.301E-05 | 6.163E-06 | 6.199E-07 | 4.156E-08 | 1.668E-09 | 3.034E-11 |
| | | S2 | - 5.025E-04 | 9.397E-05 | - 1.281E-05 | 1.234E-06 | - 7.944E-08 | 3.060E-09 | - 5.323E-11 |

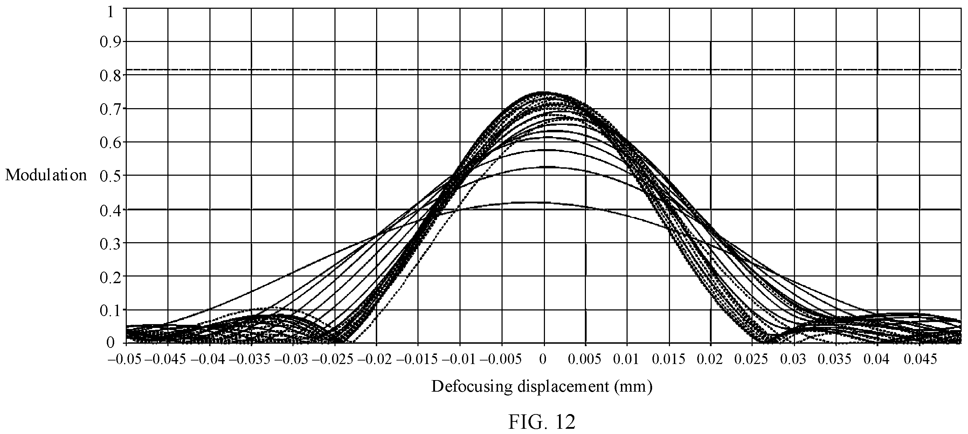

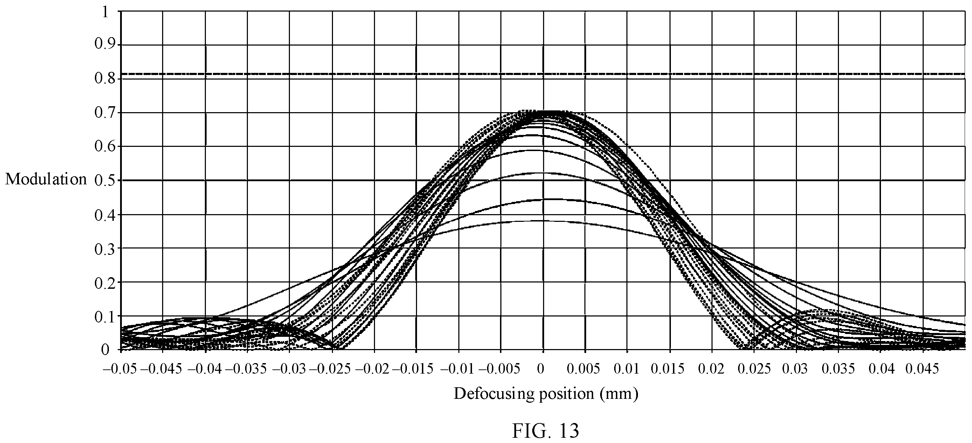

FIG. 12 and FIG. 13 show modulation transfer functions MTFs of the lens module 40 in FIG. 11A and FIG. 11B at an infinite object distance and at an object distance of 200 mm. FIG. 12 is a defocusing MTF curve at the infinite object distance when a spatial frequency is 125 lp/mm according to an embodiment. It can be learned from FIG. 12 that the modulation transfer function (MTF) in different fields of view at an infinite object distance is greater than 0.4 in both a sagittal direction and a meridional direction. The result shows that the lens module 40 in FIG. 11A and FIG. 11B can implement high-quality imaging at an infinite object distance. FIG. 13 is a defocusing MTF curve at the object distance of 200 mm when a spatial frequency is 89 lp/mm according to an embodiment. It can be learned from FIG. 13 that the modulation transfer function (MTF) in different fields of view at a macro distance of 200 mm is greater than 0.5 in both a sagittal direction and a meridional direction. The result shows that the lens module 40 in FIG. 11A and FIG. 11B can implement high-quality macro imaging.

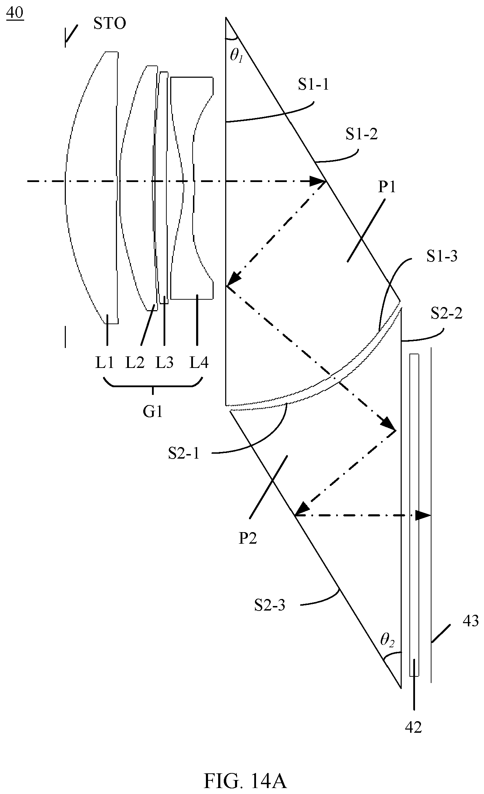

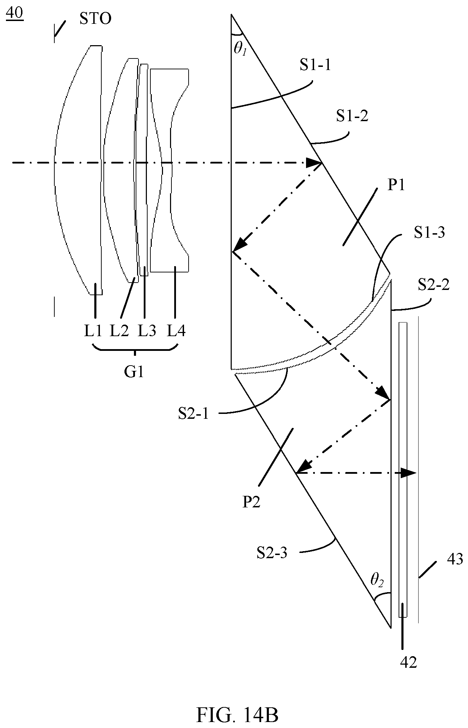

FIG. 14A and FIG. 14B are diagrams of a structure of an example of a lens module 40 according to an embodiment of this application. FIG. 14A is a status of the lens module 40 when shooting a long-distance object, and FIG. 14B is a status of the lens module when shooting a short-distance object.

The lens module 40 may include a first lens element group G1, a first prism P1, a second prism P2, and an image sensor 43 from an object side to an image side along an optical axis. It should be understood that the first lens element group G1, the first prism P1, and the second prism P2 may form an optical lens, and the image sensor 43 is located on an image side of the optical lens.

The first lens element group G1 includes at least one optical lens element. The first lens element group G1 has a positive focal power, and is configured to receive and converge light. It should be understood that the first lens element group G1 can perform focusing and imaging on objects at different object distances. The first lens element group G1 is a moving lens element group. In other words, at least one optical lens element in the first lens element group G1 can move when the first lens element group G1 is driven by a driving element such as a motor. For example, the first lens element group G1 may be wrapped by a mechanical moving part (for example, a motor), and the mechanical moving part can change relative positions of the first lens element group G1 and the first prism P1, to perform imaging on objects at different object distances.

For example, as shown in FIG. 14A and FIG. 14B, in a focusing process in which the lens module 40 switches from a far object to a near object, the first lens element group G1 can move toward the object side along the optical axis. In other words, the first lens element group G1 can move along the optical axis toward a direction away from the first prism P1.

In some embodiments, as shown in FIG. 14A and FIG. 14B, the first lens element group G1 may include a first lens element L1, a second lens element L2, a third lens element L3, and a fourth lens element L4. In the focusing process in which the lens module 40 switches from a far object to a near object, the first lens element L1, the second lens element L2, the third lens element L3, and the fourth lens element L4 can move toward the object side along the optical axis under driving of a driving element such as a motor, to implement focusing.

In some other embodiments, the first lens element group G1 includes at least one variable-focus lens element, and in the focusing process in which the optical lens switches from a far object to a near object, a focal power of the variable-focus lens element in the first lens element group G1 increases. It should be understood that the variable-focus lens element is a lens element whose lens element surface shape may be changed in an electric driving manner, an acoustic driving manner, a magnetic driving manner, or another driving manner.

The first prism P1 is located on an image side of the first lens element group G1. The first prism P1 may include at least three characteristic surfaces. For example, the first prism P1 includes a first surface S1-1, a second surface S1-2, and a third surface S1-3. Light can enter the first prism P1 from the first surface S1-1, and emitted out of the first prism P1 from the third surface S1-3. The first surface S1-1 is an incident surface (which may be referred to as a first incident surface), and is also a transmission and total internal reflection (TIR) surface. The first surface S1-1 transmits light received from the first lens element group G1 and reflects, by using the TIR, light received from the second surface S1-2 of the prism to the third surface S1-3. The second surface S1-2 is a reflective surface (which may be referred to as a first reflective surface) and is also a reflective surface coated with a lens coating. The second surface S1-2 reflects light received from the first surface S1-1 to the first surface S1-1 in the prism. The third surface S1-3 is an emergent surface (which may be referred to as a first emergent surface), and is also a transmission surface for transmitting the light received from the first surface S1-1. In short, the light enters the first prism P1 from the first surface S1-1, then is reflected by the second surface S1-2 to the first surface S1-1, and is totally internally reflected on the first surface S1-1. The reflected light is finally emitted from the first prism P1 through the third surface S1-3.

It should be understood that a first included angle *θ₁* between the first surface S1-1 and the second surface S1-2 (that is, the first incident surface S1-1 and the first reflective surface S1-2) is less than 45° (for example, *θ₁* is 25°). For example, a range of *θ₁* may be 0°<*θ₁*<10°, 10°≤*θ₁*<20°, 20°≤*θ₁*<25°, 25°≤*θ₁*<30°, 30°≤*θ₁*<35°, 35°≤*θ₁*<40°, or 40°≤*θ₁*<45°. For example, a range of *θ₁* may be 22°<*θ₁*<28°.

It should be noted that a value of the first included angle *θ₁* is related to a refractive index of the first prism P1. To meet total internal reflection, the first included angle *θ₁* and the refractive index *n₁* of the first prism P1 may satisfy the following relationship: *n*₁ ≥ 1/*sin*(2 * *θ*₁). In a conventional folding lens element system, an angle between the first surface of the first prism and the second surface of the first prism is usually 45°. In this application, an angle between the first surface S1-1 and the second surface S1-2 of the first prism P1 is set to be less than 45°. In other words, the angle between the first surface S1-1 and the second surface S1-2 of the first prism P1 is reduced, to help reduce a height of the lens element module in a Z direction (that is, a thickness direction of the electronic device). This helps reduce a size of the lens module 40.

The second prism P2 is located on an image side of the first prism P1, and the second prism P2 may include at least three characteristic surfaces. For example, the second prism P2 includes a fourth surface S2-1, a fifth surface S2-2, and a sixth surface S2-3. The fourth surface S2-1 is an incident surface (which may be referred to as a second incident surface) and is also a transmission surface. The fourth surface S2-1 transmits light received from the first prism P1 to the fifth surface S2-2 in the prism. The fifth surface S2-2 is an emergent surface (which may be referred to as a second emergent surface) and is also a transmission and TIR surface. The fifth surface S2-2 reflects, by using the TIR, the light received from the fourth surface S2-1 to the sixth surface S2-3 in the prism, and transmits light received from the sixth surface S2-3 in the prism to form an image in the image sensor 43. The sixth surface S2-3 is a reflective surface (which may be referred to as a second reflective surface) coated with a lens coating. The sixth surface S2-3 reflects light received from the fifth surface S2-2 to the fifth surface S2-2. In short, light enters the second prism P2 from the fourth surface S2-1, then is totally internally reflected by the fifth surface S2-2, is reflected to the fifth surface S2-2 through the sixth surface S2-3, and finally is emitted from the second prism P2 through the fifth surface S2-2.

It should be understood that a second included angle *θ₂* between the fifth surface S2-2 and the sixth surface S2-3 (that is, the second emergent surface S2-2 and the second reflective surface S2-3) is less than 45°. For example, *θ₂* is 25°, and the second included angle *θ₂* is equal to the first included angle *θ₁*. For example, a range of *θ₂* may be 0°<*θ₂*<10°, 10°≤*θ₂*<20°, 20°≤*θ₂*<25°, 25°≤*θ₂*<30°, 30°≤*θ₂*<35°, 35°≤*θ₂*<40°, or 40≤*θ₂*<45°. For example, a range of *θ₂* may be 22°<*θ₃*<28°.

It should be noted that a value of the second included angle *θ₂* is related to a refractive index of the second prism P2. To meet total internal reflection, the second included angle *θ₂* and the refractive index *n₂* of the second prism P2 may satisfy the following relationship: *n*₂ ≥ 1/*sin*(2 * *θ*₂). In this application, an angle between the fifth surface S2-2 and the sixth surface S2-3 of the second prism P2 is set to be less than 45°, to help reduce the height of the lens element module in the Z direction (that is, the thickness direction of the electronic device). This helps reduce a size of the lens module 40.

In the lens module 40 shown in FIG. 14A and FIG. 14B, an optical axis can be folded four times by disposing the first prism P1 and the second prism P2. The second surface S1-2 of the first prism P1 folds the optical axis once; the first surface S1-1 of the first prism P1 folds the optical axis for a second time; the fifth surface S2-2 of the second prism P2 folds the optical axis again; and then, the sixth surface S2-3 of the second prism P2 folds the optical axis for a fourth time. In this application, an aberration can be better corrected by setting a longer and more complex optical path.

It should be understood that an optical axis of the fourth surface S2-1 of the second prism P2 coincides with an optical axis of the third surface S1-3 of the first prism P1. In other words, a coaxial system is used in this application. The optical lens using the coaxial system does not generate an off-axis aberration relative to an off-axis system. Both a prism and a lens element in the coaxial system may be of a centrosymmetric structure. This facilitates production and manufacturing and has relatively strong implementability. In addition, it is easy to find central points of the prism and the lens element in the coaxial system relative to the off-axis system, to facilitate assembly of the lens elements and the prisms in the optical lens.

In some embodiments, as shown in FIG. 14A and FIG. 14B, both the first surface S1-1 and the second surface S1-2 of the first prism P1 are planes, and the third surface S1-3 is a surface having a focal power; and both the fifth surface S2-2 and the sixth surface S2-3 of the second prism P2 are planes, and the fourth surface S2-1 is a surface having a focal power. In some other embodiments, the first surface S1-1 of the first prism P1 is a plane, the second surface S1-2 and the third surface S1-3 of the first prism P1 may also be surfaces having focal powers, the fifth surface S2-2 of the second prism P2 is a plane, and the fourth surface S2-1 and the sixth surface S2-3 are surfaces having focal powers.

For example, in order that the first prism P1 has a surface having a focal power, a lens element may be fastened to the first emergent surface (that is, the third plane S1-3) of the first prism P1 by using a cementing process, to form a surface having a focal power.

For example, in order that the second prism P2 has a surface having a focal power, a lens element may be fastened to the second incident surface (that is, the fourth surface S2-1) of the second prism P2 by using a cementing process, to form a surface having a focal power.

In some other embodiments, the first prism P1 and/or the second prism P2 may be an integrally formed irregular prism. In other words, when the first prism P1 and the second prism P2 are manufactured, one surface (that is, the third surface S1-3) of the first prism P1 may be set to a surface having a focal power, and one surface (that is, the fourth surface S2-1) of the second prism P2 may be disposed as a surface having a focal power.

It should be noted that a focal power of the third surface S1-3 of the first prism P1 is opposite to a focal power of the fourth surface S2-1 of the second prism P2, and an absolute value of the focal power of the third surface S1-3 of the first prism P1 is different from an absolute value of the focal power of the fourth surface S2-1 of the second prism P2. A whole of the first prism P1 and the second prism P2 has a negative focal power. It may be understood that the first prism P1 and the second prism P2 cannot be spliced to form a parallelogram-shaped prism.

For example, the third surface S1-3 of the first prism P1 has a positive focal power, the fourth surface S2-1 of the second prism P2 has a negative focal power, and an absolute value of the focal power of the third surface S1-3 of the first prism P1 is different from an absolute value of the focal power of the fourth surface S2-1 of the second prism P2. For another example, the third surface S1-3 of the first prism P1 has a negative focal power, the fourth surface S2-1 of the second prism P2 has a positive focal power, and an absolute value of the focal power of the third surface S1-3 of the first prism P1 is different from an absolute value of the focal power of the fourth surface S2-1 of the second prism P2. It should be understood that the third surface S1-3 of the first prism P1 and the fourth surface S2-1 of the second prism P2 are disposed as surfaces having focal powers, so that the lens module 40 has good macro performance and can achieve an optical magnification of 0.1 time or more and a macro focusing distance less than 20 cm.

In the lens module 40 shown in FIG. 14A and FIG. 14B, the first lens element group G1 has a positive focal power, the first prism P1 has a positive focal power, the second prism P2 has a negative focal power, and an absolute value of a focal power of the first prism P1 is less than an absolute value of a focal power of the second prism P2. In some other embodiments, the first lens element group G1 has a positive focal power, the first prism P1 has a negative focal power, the second prism P2 has a positive focal power, and an absolute value of a focal power of the first prism P1 is greater than an absolute value of a focal power of the second prism P2.

Optionally, the optical lens may further include a third lens element group. The third lens element group may include at least one optical lens element. The third lens element group is located on an image side of the second prism P2, and is specifically located between the second prism P2 and the image sensor 43. The third lens element group may be configured to correct an aberration, to improve imaging quality.

It should be understood that the entire optical lens has a positive focal power, that is, has a light convergence function. In other words, when there is the third lens element group, a whole of the first lens element group, the first prism, the second prism, and the third lens element group has a positive focal power. The third lens element group may have a positive focal power or a negative focal power. This is not limited in this application.

Optionally, the optical lens may further include an infrared filter 42. The infrared filter 42 is located on the image side of the second prism P2, and is specifically located between the second prism P2 and the image sensor 43. More specifically, the infrared filter 42 is located between the fifth surface S2-2 of the second prism P2 and the image sensor 43. The infrared filter 42 may be configured to filter out an unnecessary optical signal. In some other embodiments, an infrared filter may not be separately disposed in the optical lens. For example, an infrared cut-off film layer is disposed on a light outlet surface of the fifth surface S2-2 of the second prism P2, to filter out an unnecessary optical signal. Alternatively, an absorbent material is added to a light outlet surface of the fifth surface S2-2 of the second prism P2, to filter out an unnecessary optical signal.

Optionally, the optical lens may further include an aperture stop STO. As shown in FIG. 14A and FIG. 14B, the aperture stop STO may be disposed on the object side of the first lens element group G1. In another embodiment, the aperture stop STO may be further located between the first lens element group G1 and the first prism P1. Specifically, the aperture stop STO may be disposed between the fourth lens element L4 and the first surface S1-1 of the first prism P1; or the aperture stop STO may be further located between the first prism P1 and the second prism P2. Specifically, the aperture stop STO may be disposed between the third surface S1-3 of the first prism P1 and the fourth surface S2-1 of the second prism P2. This is not limited in this application. It should be understood that the aperture stop STO may be configured to adjust an aperture and filter out clutter light, to improve imaging quality of the lens module 40.

The aperture stop STO may be of an isolated ring structure or a variable blade structure; or the aperture stop STO may be implemented by using a surface spraying process, for example, the aperture stop STO is formed by spraying a light shielding material on a lens element. A position of the aperture stop STO may be fixed or may be variable. For example, the position of the aperture stop STO is variable, and the position of the aperture stop STO may be adjusted based on a focusing case, to be located between different lens elements.

With reference to parameter data and a simulation result, the following presents a possible design manner of the lens module 40 shown in FIG. 14A and FIG. 14B.

For example, as shown in FIG. 14A and FIG. 14B, the lens module 40 includes a first lens element group G1, a first prism P1, a second prism P2, an infrared filter 42, and an image sensor 43 that are sequentially arranged from an object side to an image side. The first lens element group G1 includes a first lens element L1, a second lens element L2, a third lens element L3, and a fourth lens element L4. A refractive index *n₁* of the first prism P1 is 1.62. A first included angle *θ₁* between a first surface S1-1 and a second surface S1-2 of the first prism P1 is 25°. A refractive index *n₂* of the second prism P2 is 1.54. An included angle *θ₂* between the fifth surface S2-2 and the sixth surface S2-3 of the second prism P2 is 25°.

The first lens element group G1 may be wrapped by a mechanical moving part (for example, a motor), and is configured to perform imaging on objects at different object distances by changing relative positions of the first lens element group G1 and the first prism P1. A nearest focusing distance is 20 cm. The following describes related parameters of the lens module 40 shown in FIG. 14A and FIG. 14B with reference to Table 5A and Table 5B.

**Table 5A Basic parameters of the lens module**

| Optical parameters | |
|---|---|
| Focal length f/mm | 12.81 |
| F# | 2.239 |
| IMH/mm | 3.6 |
| FOV/degree | 30 |
| Total system height/mm | 7.04 |
| System shoulder height/mm | 3.53 |
| System length/mm | 13.1 |
| Nearest focusing object distance/mm | 200 |

It can be learned from Table 5A that, when the lens module 40 shown in FIG. 14A and FIG. 14B is used, the total system height of the lens module 40 is 7.04 mm, the system shoulder height is 3.53 mm, and the system length is 13.1 mm. Compared with a 45° prism solution, the total system height, the system shoulder height, and the system length are all reduced to some extent, to reduce a size of the lens module. In addition, when the lens module 40 shown in FIG. 14A and FIG. 14B is used, the nearest focusing object distance of the lens module 40 can reach 200 mm, to implement good macro effect.

**Table 5B Parameters of the moving part of the lens module at different object distances**

| Object distance (mm) | Moving part | Lens element | Surface | Center thickness (mm) |
|---|---|---|---|---|
| Unlimited | First lens element group G1 | L4 | S2 | 0.513 |
| 200 | | | | 1.442 |

It can be learned from Table 5B that, at an infinite object distance, a distance between the second surface S1-2 of the fourth lens element L4 in the first lens element group G1 and the first surface S1-1 of the first prism P1 is 0.513 mm, and the second surface S1-2 is a surface that is of the fourth lens element L4 and that is close to the first prism P1. When the lens module 40 is adjusted from an infinite object distance to an object distance of 200 mm, the first lens element group G1 moves toward a side away from the first prism P1 (that is, moves toward the object side). At the object distance of 200 mm, the distance between the second surface S1-2 of the fourth lens element L4 and the first surface S1-1 of the first prism P1 is 1.442 mm.

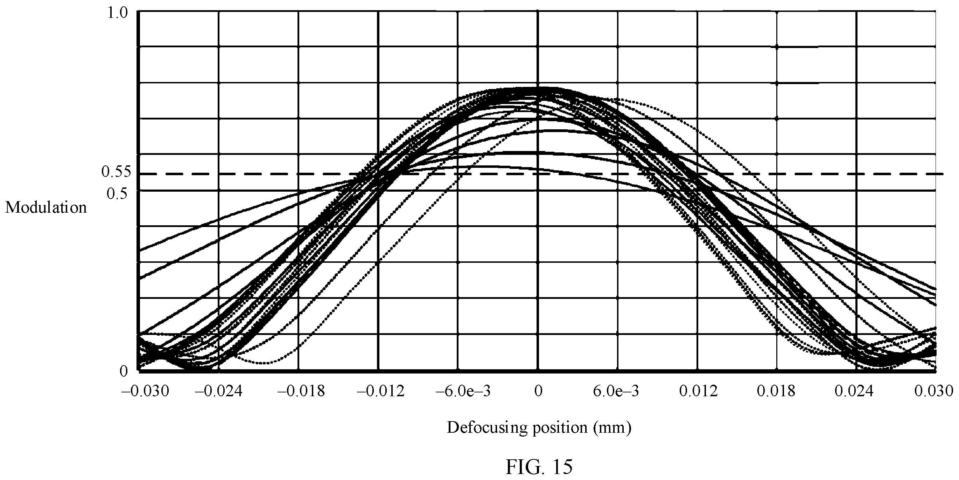

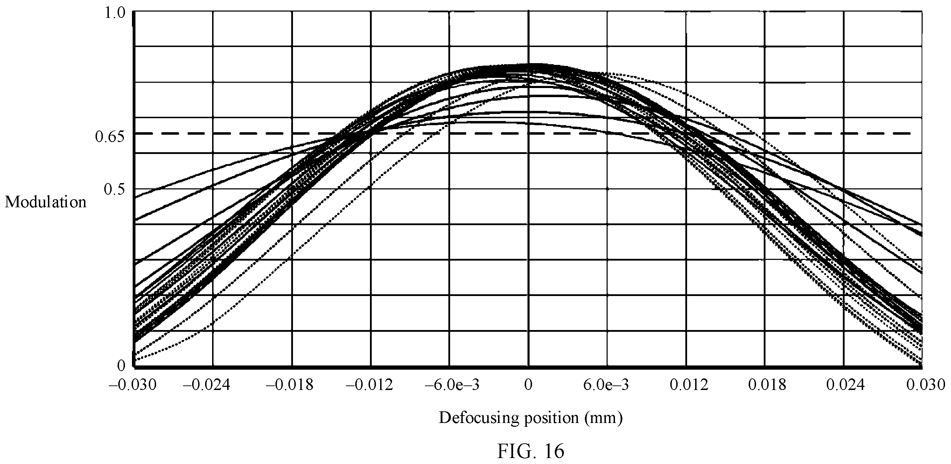

FIG. 15 and FIG. 16 show modulation transfer functions MTFs of the lens module 40 in FIG. 14A and FIG. 14B at an infinite object distance and at an object distance of 200 mm. FIG. 15 is a defocusing MTF curve at the infinite object distance when a spatial frequency is 125 lp/mm according to an embodiment. It can be learned from FIG. 15 that the modulation transfer function (MTF) in different fields of view at an infinite object distance is greater than 0.55 in both a sagittal direction and a meridional direction. The result shows that the lens module 40 in FIG. 14A and FIG. 14B can implement high-quality imaging at an infinite object distance. FIG. 16 is a defocusing MTF curve at the object distance of 200 mm when a spatial frequency is 89 lp/mm according to an embodiment. It can be learned from FIG. 16 that the modulation transfer function (MTF) in different fields of view at a macro distance of 200 mm is greater than 0.65 in both a sagittal direction and a meridional direction. The result shows that the lens module 40 in FIG. 14A and FIG. 14B can implement high-quality macro imaging.

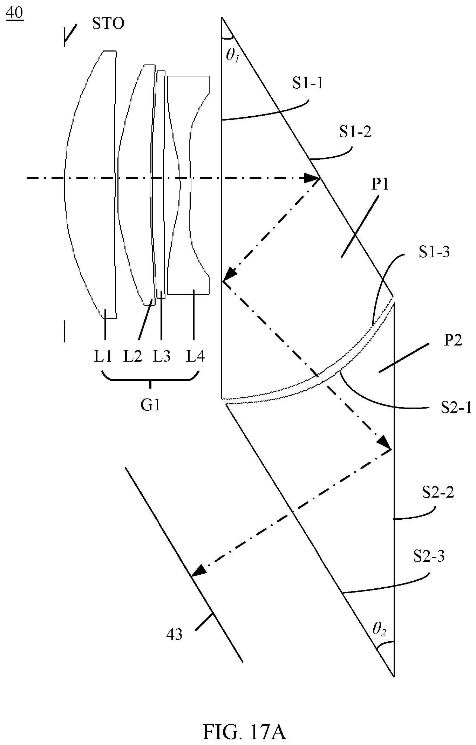

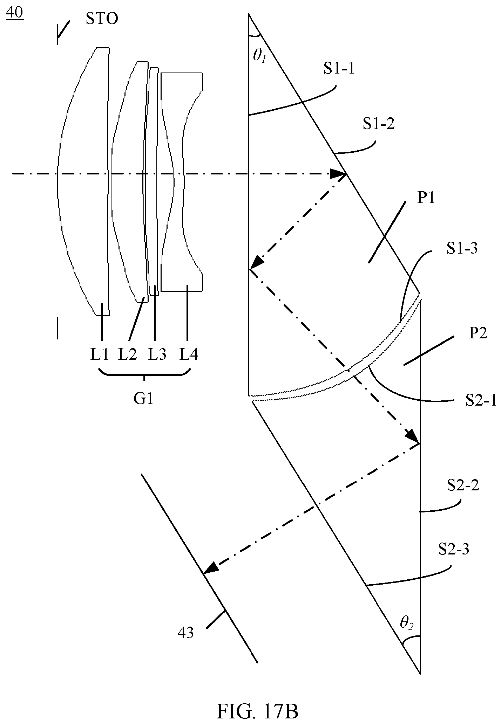

FIG. 17A and FIG. 17B are diagrams of a structure of another example of a lens module 40 according to an embodiment of this application. FIG. 17A is a status of the lens module 40 when shooting a long-distance object, and FIG. 17B is a status of the lens module when shooting a short-distance object.

It should be noted that the lens module shown in FIG. 17A and FIG. 17B has a structure similar to that of the lens module shown in FIG. 14A and FIG. 14B, and a main difference between the lens module shown in FIG. 17A and FIG. 17B and the lens module shown in FIG. 14A and FIG. 14B lies in different positions of disposing the image sensor 43. Therefore, for related descriptions of the first lens element group G1, the second lens element group G2, the first prism P1, and the second prism P2, refer to related descriptions in FIG. 14A and FIG. 14B. Details are not described herein again. The following describes the differences.

As shown in FIG. 17A and FIG. 17B, the lens module 40 includes a first lens element group G1, a first prism P1, a second prism P2, and an image sensor 43 from an object side to an image side along an optical axis. It should be understood that the first lens element group G1, the first prism P1, and the second prism P2 may form an optical lens, and the image sensor 43 is located on an image side of the optical lens. The image sensor 43 is disposed parallel to a sixth surface S2-3 (that is, a second reflective surface S2-3) of the second prism P2.

It should be understood that an optical path change of light in the first prism P1 is the same as that in the lens module shown in FIG. 14A and FIG. 14B, and an optical path change of light in the second prism P2 is different from that in the lens module shown in FIG. 14A and FIG. 14B. Specifically, in the lens module 40 shown in FIG. 17A and FIG. 17B, an optical axis can be folded three times by disposing the first prism P1 and the second prism P2. The second surface S1-2 of the first prism P1 folds the optical axis once; the first surface S1-1 of the first prism P1 folds the optical axis again; and then, the fifth surface S2-2 of the second prism P2 folds the optical axis for a third time. In this application, an aberration can be better corrected by setting a longer and more complex optical path.

It should be noted that, in the specific module 40 shown in FIG. 17A and FIG. 17B, the image sensor 43 may be disposed in a tilt manner. Specifically, the image sensor 43 may be disposed parallel to a sixth surface S2-3 (that is, the second reflective surface S2-3) of the second prism P2. Light may form an image in the image sensor 43. Therefore, a total system height of an electronic device can be reduced to some extent, and a size in a Z direction (that is, a thickness direction of the electronic device) can be further reduced, to further reduce a size of the lens module 40.

With reference to parameter data and a simulation result, the following presents a possible design manner of the lens module 40 shown in FIG. 17A and FIG. 17B.

For example, as shown in FIG. 17A and FIG. 17B, the lens module 40 includes a first lens element group G1, a first prism P1, a second prism P2, and an image sensor 43 that are sequentially arranged from an object side to an image side. The first lens element group G1 includes a first lens element L1, a second lens element L2, a third lens element L3, and a fourth lens element L4. A refractive index *n₁* of the first prism P1 is 1.62. A first included angle *θ₁* between a first surface S1-1 and a second surface S1-2 of the first prism P1 is 25°. A refractive index *n₂* of the second prism P2 is 1.54. An included angle *θ₂* between the fifth surface S2-2 and the sixth surface S2-3 of the second prism P2 is 25°.

The first lens element group G1 may be wrapped by a mechanical moving part (for example, a motor), and is configured to perform imaging on objects at different object distances by changing relative positions of the first lens element group G1 and the first prism P1. A nearest focusing distance is 20 cm. The following describes related parameters of the lens module 40 shown in FIG. 17A and FIG. 17B with reference to Table 6A and Table 6B.

**Table 6A Basic parameters of the lens module**

| Optical parameters | |
|---|---|
| Focal length f/mm | 12.81 |
| F# | 2.239 |
| IMH/mm | 3.6 |
| FOV/degree | 30 |
| Total system height/mm | 6.27 |
| System shoulder height/mm | 4.57 |
| System length/mm | 15.7 |
| Nearest focusing object distance/mm | 200 |

It should be noted that, when the image sensor 43 is disposed in a tilt manner, the "total system height" in Table 6A is a vertical distance from the first surface of the first lens element (that is, L1) to the fifth surface S2-2 of the second prism P2, the "system shoulder height" is a maximum vertical distance from the fifth surface S2-2 of the second prism P2 to the image sensor 43, and the "system length" is a longest distance of the lens module 40 in a length direction of the electronic device, that is, a vertical distance from the top of the first lens element L1 to the bottom of the image sensor 43.

It can be learned from Table 6A that, when the lens module 40 shown in FIG. 17A and FIG. 17B is used, the total system height of the lens module 40 is 6.27 mm, the system shoulder height is 4.57 mm, and the system length is 15.7 mm. Compared with a 45° prism solution, the total system height, the system shoulder height, and the system length are all reduced to some extent, to reduce a size of the lens module. In addition, when the lens module 40 shown in FIG. 17A and FIG. 17B is used, the nearest focusing object distance of the lens module 40 can reach 200 mm, to implement good macro effect.

**Table 6B Parameters of the moving part of the lens module at different object distances**

| Object distance (mm) | Moving part | Lens element | Surface | Center thickness (mm) |
|---|---|---|---|---|
| Unlimited | First lens element group G1 | L4 | S2 | 0.513 |
| 200 | | | | 1.442 |

It can be learned from Table 6B that, at an infinite object distance, a distance between the second surface S1-2 of the fourth lens element L4 in the first lens element group G1 and the first surface S1-1 of the first prism P1 is 0.513 mm, and the second surface S1-2 is a surface that is of the fourth lens element L4 and that is close to the first prism P1. When the lens module 40 is adjusted from an infinite object distance to an object distance of 200 mm, the first lens element group G1 moves toward a side away from the first prism P1 (that is, moves toward the object side). At the object distance of 200 mm, the distance between the second surface S1-2 of the fourth lens element L4 and the first surface S1-1 of the first prism P1 is 1.442 mm.

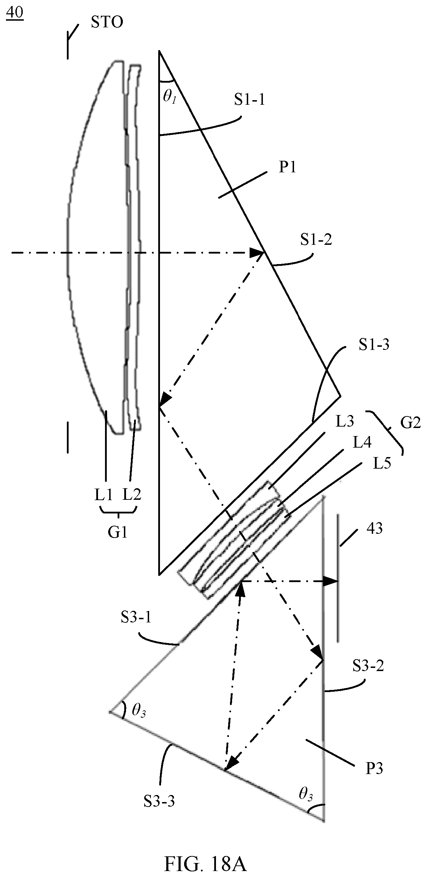

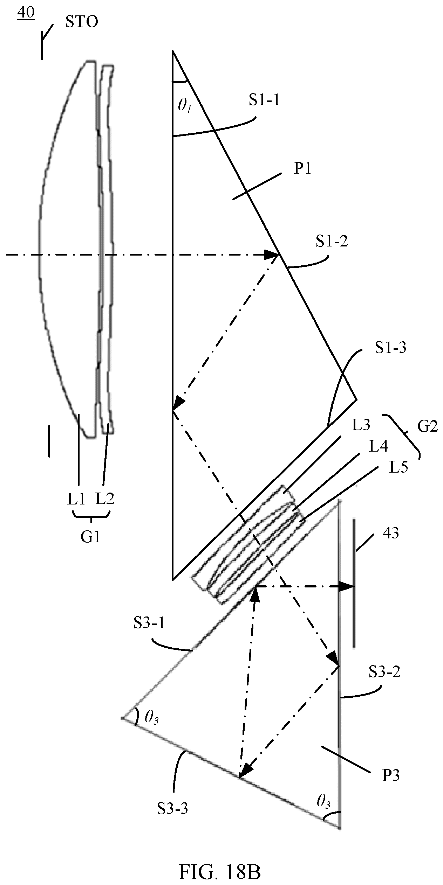

FIG. 18A and FIG. 18B are diagrams of a structure of another example of a lens module 40 according to an embodiment of this application. FIG. 18A is a status of the lens module 40 when shooting a long-distance object, and FIG. 18B is a status of the lens module when shooting a short-distance object.

The lens module 40 may include a first lens element group G1, a first prism P1, a second lens element group G2, a third prism P3, and an image sensor 43 from an object side to an image side along an optical axis. It should be understood that the first lens element group G1, the first prism P1, the second lens element group G2, and the third prism P3 may form an optical lens, and the image sensor 43 is located on the image side of the optical lens. The first lens element group G1 includes at least one optical lens element. The first lens element group G1 has a positive focal power, and is configured to receive and converge light. For example, the first lens element group G1 may include a first lens element L1 and a second lens element L2. The second lens element group G2 includes at least one optical lens element. The second lens element group G2 has a negative focal power. For example, the second lens element group G2 may include a third lens element L3, a fourth lens element L4, and a fifth lens element L5.

The first lens element group G1 can perform focusing and imaging on objects at different object distances. The first lens element group G1 is a moving lens element group. In other words, the first lens element group G1 can entirely move or at least one optical lens element in the first lens element group G1 can move when the first lens element group G1 is driven by a driving element such as a motor. For example, the first lens element group G1 may be wrapped by a mechanical moving part (for example, a motor), and the mechanical moving part can change relative positions of the first lens element group G1 and the first prism P1, to perform imaging on objects at different object distances.

For example, as shown in FIG. 18A and FIG. 18B, in a focusing process in which the lens module 40 switches from a far object to a near object, the first lens element L1 and the second lens element L2 can move toward the object side along the optical axis under driving of the driving element such as a motor, to implement focusing.

The first prism P1 is located on an image side of the first lens element group G1. The first prism P1 may include at least three characteristic surfaces. For example, the first prism P1 includes a first surface S1-1, a second surface S1-2, and a third surface S1-3. Light can enter the first prism P1 from the first surface S1-1, and emitted out of the first prism P1 from the third surface S1-3. The first surface S1-1 is an incident surface (which may be referred to as a first incident surface), and is also a transmission and total internal reflection (TIR) surface. The first surface S1-1 transmits light received from the first lens element group G1 and totally internally reflects, by using the TIR, light received from the second surface S1-2 to the third surface S1-3. The second surface S1-2 is a reflective surface (which may be referred to as a first reflective surface) and is also a reflective surface coated with a lens coating. The second surface S1-2 reflects light received from the first surface S1-1 to the first surface S1-1 in the prism. The third surface S1-3 is an emergent surface (which may be referred to as a first emergent surface), and is also a transmission surface for transmitting the light received from the first surface S1-1. In short, the light enters the first prism P1 from the first surface S1-1, then is reflected by the second surface S1-2 to the first surface S1-1, and is totally internally reflected on the first surface S1-1. The reflected light is finally emitted from the first prism P1 through the third surface S1-3. In other words, the first prism P1 may be configured to fold an optical axis of an optical system two times.

It should be understood that a first included angle θ1 between the first surface S1-1 and the second surface S1-2 (that is, the first incident surface and the first reflective surface) is less than 45° (for example, θ1 is 25°). For example, a range of θ1 may be 0°<θ1<10°, 10°≤θ1<20°, 20°≤θ1<25°, 25°≤θ1<30°, 30°≤θ1<35°, 35°≤θ1<40°, or 40°≤θ1<45°. For example, a range of *θ₁* may be 22°<*θ₁*<28°.

It should be noted that a value of the first included angle *θ₁* is related to a refractive index of the first prism P1. To meet total internal reflection, the first included angle *θ₁* and the refractive index *n₁* of the first prism P1 may satisfy the following relationship: *n*₁ ≥ 1/*sin*(2 * *θ*₁). In a conventional folding lens element system, an angle between the first surface of the first prism and the second surface of the first prism is usually 45°. In this application, an angle between the first surface S1-1 and the second surface S1-2 of the first prism P1 is set to be less than 45°. In other words, the angle between the first surface S1-1 and the second surface S1-2 of the first prism P1 is reduced, to help reduce a height of the lens element module in a Z direction (that is, a thickness direction of the electronic device). This helps reduce a size of the lens module 40.

The third prism P3 is located on an image side of the first prism P1 or the second lens element group G2, and the third prism P3 may include at least three characteristic surfaces. For example, the third prism P3 includes a seventh surface S3-1, an eighth surface S3-2, and a ninth surface S3-3. The seventh surface S3-1 is an incident surface (which may be referred to as a third incident surface) and is also a transmission surface. The seventh surface S3-1 transmits light received from the first prism P1 to the eighth surface S3-2 in the prism. The seventh surface S3-1 is also a total internal reflection (TIR) surface, and totally internally reflects, by using the TIR surface, light received from the ninth surface S3-3 to the eighth surface S3-2. The eighth surface S3-2 is an emergent surface (which may be referred to as a third emergent surface) and is also a total internal reflection surface. The eighth surface totally internally reflects light received from the seventh surface S3-1 to the ninth surface S3-3. The eighth surface S3-2 is also a transmission surface, and can transmit light from the seventh surface S3-1 to form an image in the image sensor 43. The ninth surface S3-3 is a reflective surface (which may be referred to as a third reflective surface) coated with a lens coating. The ninth surface S3-3 reflects light received from the eighth surface S3-2 to the seventh surface S3-1.

In short, light enters the third prism P3 from the seventh surface S3-1 (that is, the third incident surface), is totally internally reflected from the eighth surface S3-2 (that is, the third emergent surface) to the ninth surface S3-3 (that is, the third reflective surface), is reflected from the ninth surface S3-3 (that is, the third reflective surface) to the seventh surface S3-1 (that is, the third incident surface), then is totally internally reflected from the seventh surface S3-1 (that is, the third incident surface) to the eighth surface S3-2 (that is, the third emergent surface), and is finally emitted from the third prism P3 through the eighth surface S3-2 (that is, the third emergent surface). In other words, the third prism P3 may be configured to fold an optical axis of an optical system three times.

It should be noted that light is reflected three times in the third prism P3 (one or two reflections occur in the foregoing embodiment), and an optical path is folded in the third prism P3 more times. Therefore, space utilization is higher, which is more conducive to a design of a long-focus lens. In addition, as shown in an arrow direction of light in FIG. 18A and FIG. 18B, when light incident to the third prism P3 is reflected for a second time, that is, when the light is reflected on the ninth surface S3-3 (that is, the third reflective surface), the light is bent upward. In this way, an optical axis of emergent light of the third prism P3 may move upward, thereby further reducing a length of the optical system.

It should be understood that an included angle between the seventh surface S3-1 and the ninth surface S3-3 (that is, the third incident surface and the third reflective surface) is equal to an included angle between the eighth surface S3-2 and the ninth surface S3-3 (that is, the third emergent surface and the third reflective surface). The included angle formed between the seventh surface S3-1 and the ninth surface S3-3 (that is, the third incident surface and the third reflective surface) or between the eighth surface S3-2 and the ninth surface S3-3 (that is, the third emergent surface and the third reflective surface) is denoted as a third included angle *θ₃*. The third included angle *θ₃* is twice the first included angle *θ₁*, that is, *θ₃*=2*θ₁*. The third included angle *θ₃* is less than 90° and greater than 40°.

It should be noted that a larger refractive index of a prism material of the first prism P1 and the third prism P3 is better, a lower dispersion coefficient is better, and a prism with a higher refractive index is more likely to implement total internal reflection. For example, both a refractive index of the first prism P1 and a refractive index of the third prism P3 are greater than 1.5, and Abbe numbers of the two prisms are greater than 40.

It should be understood that the second lens element group G2 is disposed between the first prism P1 and the third prism P3, so that the lens module 40 can have good macro performance and can achieve an optical magnification of 0.1 time or more and a macro focusing distance less than 20 cm.

It should be understood that an optical axis of the third surface S1-3 of the first prism P1 coincides with an optical axis of the second lens element group G2, and an optical axis of the seventh surface S3-1 of the third prism P3 coincides with an optical axis of the second lens element group G2. In other words, a coaxial system is used in this application. The optical lens using the coaxial system does not generate an off-axis aberration relative to an off-axis system. Both a prism and a lens element in the coaxial system may be of a centrosymmetric structure. This facilitates production and manufacturing and has relatively strong implementability. In addition, it is easy to find central points of the prism and the lens element in the coaxial system relative to the off-axis system, to facilitate assembly of the lens elements and the prisms in the optical lens.

In some embodiments, as shown in FIG. 18A and FIG. 18B, the first surface S1-1, the second surface S1-2, and the third plane S1-3 of the first prism P1 may all be planes, and the seventh surface S3-1, the eighth surface S3-2, and the ninth surface S3-3 of the third prism P3 may all be planes.

In some other embodiments, the first surface S1-1 of the first prism P1 is a plane, and the second surface S1-2 of the first prism P1 and/or the third plane S1-3 of the first prism P1 may be a surface having a focal power.

For example, in order that the first prism P1 has a surface having a focal power, a lens element in the second lens element group G2 may be fastened to the first emergent surface (that is, the third plane S1-3) of the first prism P1 by using a cementing process.

In the lens module 40 shown in FIG. 18A and FIG. 18B, the image sensor 43 is located on an image side of an optical lens, and is located on an image side of the third prism P3. The image sensor 43 may be disposed parallel to the eighth surface S3-2 (that is, the third emergent surface) of the third prism P3. In this way, the third prism P3 can fold light three times, and the first prism P1 and the third prism P3 can fold light five times. The second surface S1-2 of the first prism P1 folds light once; the first surface S1-1 of the first prism P1 folds light for a second time; the eighth surface S3-2 of the third prism P3 folds light again; the ninth surface S3-3 of the third prism P3 folds light for a fourth time; and then, the seventh surface S3-1 of the third prism P3 folds light for a fifth time, so that light is finally incident to the image sensor 43. In this application, an aberration can be better corrected by setting a longer and more complex optical path. Therefore, space utilization is higher, which is more conducive to a design of a long-focus lens.

It should be understood that the entire optical lens having a positive focal power indicates that an absolute value of a focal power of the first lens element group G1 is greater than an absolute value of a focal power of the second lens element group G2.

In an example, L1 may have a positive focal power, L2 may have a negative focal power, and a whole of L1 and L2 (that is, the first lens element group G1) has a positive focal power. In this example, the positive focal power is set for L1, and the negative focal power is set for L2. This facilitates control of an aberration of light passing through the first lens element group G1. In this way, it is easier to perform aberration correction by using the first lens element group G1, so that the optical lens has better imaging quality. In another example, L1 may have a positive focal power, and L2 may also have a positive focal power. This is not limited in this application.

It should be understood that at least one of the three lens elements in the second lens element group G2 has a positive focal power, and at least one of the three lens elements has a negative focal power. Specific focal powers of L3, L4, and L5 are not limited. For example, L3 may have a positive focal power, L4 may have a negative focal power, L5 may have a negative focal power (or a positive focal power), and a whole (that is, the second lens element group G2) of L3, L4, and L5 has a negative focal power.

Optionally, the optical lens may further include a third lens element group. The third lens element group may include at least one optical lens element. The third lens element group is located on an image side of the third prism P3, and may be specifically located between the third prism P3 and the image sensor 43. The third lens element group may be configured to correct an aberration, to improve imaging quality.

It should be understood that the entire optical lens has a positive focal power, that is, has a light convergence function. In other words, when there is the third lens element group, a whole of the first lens element group, the second lens element group, and the third lens element group has a positive focal power. The third lens element group may have a positive focal power or a negative focal power. This is not limited in this application.

It should be noted that, to better perform aberration correction, a larger quantity of lens elements disposed in the optical lens is better. However, limited by a total system height of the optical lens and a size limitation of the electronic device, a quantity of lens elements included in the optical lens in this embodiment of this application may be 3 to 5. For example, the first lens element group G1 may include one lens element, and the second lens element group G2 may include four lens elements. For another example, the first lens element group G1 may include two lens elements, and the second lens element group G2 may include three lens elements. For another example, the first lens element group G1 may include one lens element, the second lens element group G2 may include one lens element, and the third lens element group G3 may include one lens element.

Optionally, the optical lens may further include an infrared filter 42. The infrared filter 42 is located on the image side of the third prism P3, and is specifically located between the third prism P3 and the image sensor 43. More specifically, the infrared filter 42 is located between the eighth surface S3-2 of the third prism P3 and the image sensor 43. The infrared filter 42 may be configured to filter out an unnecessary optical signal. In some other embodiments, an infrared filter may not be separately disposed in the optical lens. For example, an infrared cut-off film layer is disposed on a light outlet surface of the eighth surface S3-2 of the third prism P3, to filter out an unnecessary optical signal. Alternatively, an absorbent material is added to a light outlet surface of the eighth surface S3-2 of the third prism P3, to filter out an unnecessary optical signal.

Optionally, the optical lens may further include an aperture stop STO. As shown in FIG. 18A and FIG. 18B, the aperture stop STO may be located on the object side of the first lens element group G1, to reduce a total system height of the optical lens. In some other embodiments, the aperture stop STO may be further disposed between the first lens element group G1 and the first prism P1. In some other embodiments, the aperture stop STO may be further located between the first prism P1 and the second lens element group G2, or located between the second lens element group G2 and the third prism P3. It should be understood that the aperture stop STO may be configured to adjust an aperture and filter out clutter light, to improve imaging quality of the lens module 40.

The aperture stop STO may be of an isolated ring structure or a variable blade structure; or the aperture stop STO may be implemented by using a surface spraying process, for example, the aperture stop STO is formed by spraying a light shielding material on a lens element. A position of the aperture stop STO may be fixed or may be variable. For example, the position of the aperture stop STO is variable, and the position of the aperture stop STO may be adjusted based on a focusing case, to be located between different lens elements.

With reference to parameter data and a simulation result, the following presents a possible design manner of the lens module 40 shown in FIG. 18A and FIG. 18B.

For example, as shown in FIG. 18A and FIG. 18B, the lens module 40 includes a first lens element group G1, a first prism P1, a second lens element group G2, a third prism P3, and an image sensor 43 that are sequentially arranged from an object side to an image side. The first lens element group G1 includes the first lens element L1 and the second lens element L2, and the second lens element group includes the third lens element L3, the fourth lens element L4, and the fifth lens element L5. A refractive index *n₁* of the first prism P1 may be 1.74. A first included angle *θ₁* between a first surface S1-1 and a second surface S1-2 of the first prism P1 may be 25°. A refractive index *n₂* of the third prism P3 may be 1.70. An included angle *θ₃* between the seventh surface S3-1 and the ninth surface S3-3 of the third prism P3 or between the eighth surface S3-2 and the ninth surface S3-3 of the third prism P3 may be 50°.

The first lens element group G1 may be wrapped by a mechanical moving part (for example, a motor), and perform imaging on objects at different object distances by changing relative positions of the first lens element group G1 and the first prism P1. A nearest focusing distance is 100 cm. The following describes related parameters of the lens module 40 shown in FIG. 18A and FIG. 18B with reference to Table 7.

**Table 7 Basic parameters of the lens module**

| Optical parameters | |
|---|---|
| Focal length f/mm | 44.5 |
| F# | 2.97 |
| IMH/mm | 3.6 |
| FOV/degree | 9.25 |
| Total system height/mm | 29.4 |
| System shoulder height/mm | 9.9 |
| System length/mm | 12.7 |
| Nearest focusing object distance/mm | 1000 |

It should be noted that, when the image sensor 43 is vertically disposed, the "total system height" in Table 7 is a vertical distance from the first surface of the first lens element (that is, L1) to the image sensor 43, the "system shoulder height" is a vertical distance from the first surface S1-1 of the first prism P1 to the image sensor 43, and the "system length" is a longest distance of the lens module 40 in a length direction of the electronic device, that is, a vertical distance from the top of the first lens element L1 to the bottom of the image sensor 43.

It can be learned from Table 7 that, when the lens module 40 shown in FIG. 18A and FIG. 18B is used, the system length of the lens module 40 is 12.7 mm. Compared with the solution in the foregoing embodiment, the system length of the lens module 40 shown in FIG. 18A and FIG. 18B is reduced to some extent, to reduce a size of the lens module.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical lens, comprising a first lens element group, a first prism, a second lens element group, and a second prism that are sequentially disposed from an object side to an image side, wherein
the first lens element group comprises at least one lens element, the first lens element group has a positive focal power, and the first lens element group is configured to: receive light, and converge the light;
the first prism comprises a first incident surface, a first reflective surface, and a first emergent surface, a first included angle between the first incident surface and the first reflective surface is less than 45°, and an optical axis of the first emergent surface coincides with an optical axis of the second lens element group;
the second lens element group comprises at least one lens element, and the second lens element group has a negative focal power; and
the second prism comprises a second incident surface, a second reflective surface, and a second emergent surface, a second included angle between the second reflective surface and the second emergent surface is less than 45°, the second included angle is equal to the first included angle, and an optical axis of the second incident surface coincides with an optical axis of the second lens element group.

2. The optical lens according to claim 1, wherein the first included angle *θ*₁ and a refractive index *n₁* of the first prism satisfy *n*₁ ≥ 1/*sin*(2 * *θ*₁).

3. The optical lens according to claim 1 or 2, wherein the second included angle *θ*₂ and a refractive index *n₂* of the second prism satisfy *n*₂ ≥ 1/*sin*(2 * *θ*₂).

4. The optical lens according to any one of claims 1 to 3, wherein the first lens element group is a moving lens element group, and in a focusing process in which the optical lens switches from a far object to a near object, the first lens element group moves toward the object side along an optical axis.

5. The optical lens according to any one of claims 1 to 3, wherein the first lens element group comprises at least one variable-focus lens element, and in a focusing process in which the optical lens switches from a far object to a near object, a focal power of the variable-focus lens element in the first lens element group increases.

6. The optical lens according to claim 5, wherein the second lens element group comprises at least one variable-focus lens element, and the variable-focus lens element in the second lens element group is configured to correct an additional aberration brought by the variable-focus lens element in the first lens element group.

7. The optical lens according to any one of claims 1 to 6, wherein the first emergent surface is a plane, the second lens element group comprises a first lens element, an object-side surface of the first lens element is a plane, and the first lens element is fastened to the first emergent surface of the first prism by using a cementing process.

8. The optical lens according to any one of claims 1 to 7, wherein the second incident surface is a plane, the second lens element group comprises a second lens element, an image-side surface of the second lens element is a plane, and the second lens element is fastened to the second incident surface of the second prism by using a cementing process.

9. The optical lens according to any one of claims 1 to 8, wherein the optical lens further comprises an aperture stop, and the aperture stop is located on the object side of the first lens element group, or the aperture stop is located between the first lens element group and the first prism, or the aperture stop is located between the first prism and the second lens element group, or the aperture stop is located between the second lens element group and the second prism.

10. The optical lens according to any one of claims 1 to 9, wherein the optical lens further comprises an infrared filter, and the infrared filter is located on the image side of the second prism.

11. The optical lens according to any one of claims 1 to 10, wherein the optical lens further comprises a third lens element group, the third lens element group comprises at least one lens element, and the third lens element group is located on the image side of the second prism.

12. An optical lens, comprising a first lens element group, a first prism, and a second prism that are sequentially disposed from an object side to an image side, wherein
the first lens element group comprises at least one lens element, the first lens element group has a positive focal power, and the first lens element group is configured to: receive light, and converge the light;
the first prism comprises a first incident surface, a first reflective surface, and a first emergent surface, and a first included angle between the first incident surface and the first reflective surface is less than 45°; and
the second prism comprises a second incident surface, a second reflective surface, and a second emergent surface, a second included angle between the second reflective surface and the second emergent surface is less than 45°, the second included angle is equal to the first included angle, and an optical axis of the second incident surface coincides with an optical axis of the first emergent surface; wherein
the first emergent surface has a focal power, the second incident surface has a focal power, the focal power of the second incident surface is opposite to the focal power of the first emergent surface, and a whole of the first prism and the second prism has a negative focal power.

13. The optical lens according to claim 12, wherein the first included angle *θ*₁ and a refractive index *n₁* of the first prism satisfy *n*₁ ≥ 1/*sin*(2 * *θ*₁).

14. The optical lens according to claim 12 or 13, wherein the second included angle *θ*₂ and a refractive index *n₂* of the second prism satisfy *n*₂ ≥ 1/*sin*(2 * *θ*₂).

15. The optical lens according to any one of claims 12 to 14, wherein the first lens element group is a moving lens element group, and in a focusing process in which the optical lens switches from a far object to a near object, the first lens element group moves toward the object side along an optical axis.

16. The optical lens according to any one of claims 12 to 14, wherein the first lens element group comprises at least one variable-focus lens element, and in a focusing process in which the optical lens switches from a far object to a near object, a focal power of the variable-focus lens element in the first lens element group increases.

17. The optical lens according to any one of claims 12 to 16, wherein the optical lens further comprises a first lens element, and the first lens element is fastened to the first emergent surface by using a cementing process, to form a surface, having a focal power, of the first prism.

18. The optical lens according to any one of claims 12 to 17, wherein the optical lens further comprises a second lens element, and the second lens element is fastened to the second incident surface by using a cementing process, to form a surface, having a focal power, of the second prism.

19. The optical lens according to any one of claims 12 to 16, wherein the first prism and/or the second prism are/is an integrally formed prism with a focal power.

20. The optical lens according to any one of claims 12 to 19, wherein the optical lens further comprises an aperture stop, and the aperture stop is located on the object side of the first lens element group, or the aperture stop is located between the first lens element group and the first prism, or the aperture stop is located between the first prism and the second prism.

21. The optical lens according to any one of claims 12 to 20, wherein the optical lens further comprises an infrared filter, and the infrared filter is located on the image side of the second prism.

22. The optical lens according to any one of claims 12 to 21, wherein the optical lens further comprises a third lens element group, the third lens element group comprises at least one lens element, and the third lens element group is located on the image side of the second prism.

23. An optical lens, comprising a first lens element group, a first prism, a second lens element group, and a third prism that are sequentially disposed from an object side to an image side, wherein
the first lens element group comprises at least one lens element, the first lens element group has a positive focal power, and the first lens element group is configured to: receive light, and converge the light;
the first prism comprises a first incident surface, a first reflective surface, and a first emergent surface, a first included angle between the first incident surface and the first reflective surface is less than 45°, and an optical axis of the first emergent surface coincides with an optical axis of the second lens element group;
the second lens element group comprises at least one lens element, and the second lens element group has a negative focal power; and
the third prism comprises a third incident surface, a third reflective surface, and a third emergent surface, an included angle between the third incident surface and the third reflective surface is equal to an included angle between the third emergent surface and the third reflective surface, a third included angle formed between the third incident surface and the third reflective surface is twice the first included angle, the third included angle is less than 90° and greater than 40°, and an optical axis of the third incident surface coincides with an optical axis of the second lens element group.

24. The optical lens according to claim 23, wherein the first included angle *θ*₁ and a refractive index *n₁* of the first prism satisfy *n*₁ ≥ 1/*sin*(2 * *θ*₁).

25. The optical lens according to claim 23 or 24, wherein the first lens element group is a moving lens element group, and in a focusing process in which the optical lens switches from a far object to a near object, the first lens element group moves toward the object side along an optical axis.

26. The optical lens according to claim 23 or 24, wherein the first lens element group comprises at least one variable-focus lens element, and in a focusing process in which the optical lens switches from a far object to a near object, a focal power of the variable-focus lens element in the first lens element group increases.

27. The optical lens according to claim 26, wherein the second lens element group comprises at least one variable-focus lens element, and the variable-focus lens element in the second lens element group is configured to correct an additional aberration brought by the variable-focus lens element in the first lens element group.

28. The optical lens according to any one of claims 23 to 27, wherein the first emergent surface is a plane, the second lens element group comprises a first lens element, an object-side surface of the first lens element is a plane, and the first lens element is fastened to the first emergent surface of the first prism by using a cementing process.

29. The optical lens according to any one of claims 23 to 28, wherein the optical lens further comprises an aperture stop, and the aperture stop is located on the object side of the first lens element group, or the aperture stop is located between the first lens element group and the first prism, or the aperture stop is located between the first prism and the second lens element group, or the aperture stop is located between the second lens element group and the third prism.

30. The optical lens according to any one of claims 23 to 29, wherein the optical lens further comprises an infrared filter, and the infrared filter is located on the image side of the third prism.

31. The optical lens according to any one of claims 23 to 30, wherein the optical lens further comprises a third lens element group, the third lens element group comprises at least one lens element, and the third lens element group is located on the image side of the third prism.

32. A lens module, comprising an image sensor and the optical lens according to any one of claims 1 to 11, or comprising an image sensor and the optical lens according to any one of claims 12 to 22, wherein the optical lens is configured to image a scene on an object side on the image sensor.

33. The lens module according to claim 32, wherein the image sensor is located on an image side of the optical lens and is disposed parallel to the second emergent surface.

34. The lens module according to claim 32, wherein the image sensor is located on an image side of the optical lens and is disposed parallel to the second reflective surface.

35. A lens module, comprising an image sensor and the optical lens according to any one of claims 23 to 31, wherein the optical lens is configured to image a scene on an object side on the image sensor.

36. The lens module according to claim 35, wherein the image sensor is located on an image side of the optical lens and is disposed parallel to the third emergent surface.

37. An electronic device, comprising an image processor and the lens module according to any one of claims 32 to 36, wherein the image processor is communicatively connected to the lens module, and the image processor is configured to obtain: image data from the lens module, and process the image data.
